# EUROPEAN PATENT APPLICATION

(11) **EP 4 844 876 A1**
(43) Date of publication of application: **25.11.2026**
(21) Application number: 24918902.8
(22) Date of filing: 23.02.2024
(51) Int. Cl.: H01M 10/058, H01M 4/62, H01M 50/531, H01M 4/48, H01M 4/58, H01M 4/13, H01M 4/02

(54) **BATTERY CELL**

(30) Priority: 19.01.2024 KR 20240008974
(71) Applicant: Koulomb Co., Ltd., Seongnam-si, Gyeonggi-do 13120 (KR)
(72) Inventor: PARK, Kwangjin, Seoul 06521 (KR)
(74) Representative: Vossius & Partner Patentanwälte Rechtsanwälte mbB
(86) International application number: PCT/KR2024/002398
(87) International publication number: WO 2025/154868

(57) **Abstract**

The present application may provide an electric device comprising: a battery cell capable of securing excellent capacity retention, high current output, and appropriate capacity by combining an electrode responsible for high capacity and an electrode responsible for high current output, and capable of flexibly coping with rapidly changing current output conditions while having appropriate capacity; and an electric vehicle including the battery cell and having excellent output and an improved driving range.

## Description

### TECHNICAL FIELD

### CROSS-REFERENCE TO RELATED APPLICATION(S)

This application claims the benefit of Korean Patent Application No. 10-2024-0008974, filed on January 19, 2024, in the Korean Intellectual Property Office, the disclosure of which is incorporated herein by reference.

### Field of the Invention

Example embodiments relate to a battery cell, and more particularly, to application of the battery cell.

### BACKGROUND

The performance of a battery may depend on the performance of the battery cell as a functional unit. The performance of a battery cell may be determined by the electrodes (a cathode and an anode) and electrolytes that make up the battery cell. Specifically, the type and contents of an active material or other materials used in the electrodes may directly affect the performance of the battery cell.

### DETAILED DESCRIPTION OF THE INVENTION

### TECHNICAL GOALS

The application provides a battery cell by which excellent capacity retention, high current output and appropriate capacity may be secured by electrodes having high capacity and electrodes having high current output being combined. May further provided is a battery module or a battery pack containing the battery cell.

The application provides a battery cell that may have appropriate capacity and may flexibly respond to rapidly changing current output conditions. Further provided is an electric vehicle with excellent output and improved mileage, including the battery with the characteristics.

### TECHNICAL SOLUTIONS

In a battery cell according to an example embodiment of the present application, the battery cell includes a cathode, an anode and a separator between the cathode and the anode, wherein the cathode includes a first cathode and a second cathode, the first cathode includes a first cathode active material layer, and the second cathode includes a second cathode active material layer, each of the first cathode active material layer and the second cathode active material layer includes a cathode active material, a cathode binder and a conductive material, and the first cathode and the second cathode satisfy at least one of the following conditions.

### [condition]

condition i) a cathode active material included in the first cathode active material layer and a cathode active material included in the second cathode active material layer are different materials, condition ii) a content ratio of at least one selected from among the cathode active material, the cathode binder, and the conductive material included in the first cathode active material layer differs from a content ratio thereof included in the second cathode active material layer, and condition iii) a loading amount (LW1) of a first cathode active material composition forming the first cathode active material layer differs from a loading amount (LW2) of a second cathode active material composition forming the second cathode active material layer.

In a battery cell according to an example embodiment of the present application, the first cathode may include a first cathode tab and the second cathode may include a second cathode tab, and the first cathode tab and the second cathode tab may be connected to an identical cathode lead.

In a battery cell according to an example embodiment of the present application, the second cathode may have a higher CP_{R,n} when n is 100 in below formula R, when compared to the first cathode,

[Formula R] ${CP}_{R , n} = {CP}_{n} / {CP}_{1} \times 100 ,$
wherein CPₙ may indicate n cycle discharge capacity, and CP₁ may indicate 1 cycle discharge capacity.

In a battery cell according to an example embodiment of the present application, a ratio (N₁/N₂) of a number of the first cathodes (N₁) to the number of the second cathodes (N₂) may be 10 or less.

In a battery cell according to an example embodiment of the present application, the number of the first cathodes (N₁) may be 95% or less than 95% of a total number of cathodes (N_{T}), and the number of the second cathodes (N₂) may be 5% or more than 5% (not including 100%) of the total number of cathodes (N_{T}).

In a battery cell according to an example embodiment of the present application, the anode may include a first anode and a second anode, the first anode may include a first anode active material layer, and the second anode may include a second anode active material layer, each of the first anode active material layer and the second anode active material layer may include an anode active material, an anode binder and a conductive material, and the first anode and the second anode may satisfy at least one of the following conditions

### [condition]

condition iv) at least one of a constituent element and a content ratio of a main compound of the anode active material included in the first anode active material layer differs from a corresponding constituent element or content ratio of a main compound of the anode active material included in the second anode active material layer, condition v) a content ratio of at least one selected from among the anode active material, the anode binder, and the conductive material included in the first anode active material layer differs from a content ratio thereof included in the second anode active material layer, and condition vi) a loading amount (LW3) of a first anode active material composition forming the first anode active material layer differs from a loading amount (LW4) of a second anode active material composition forming the second anode active material layer.

In a battery cell according to an example embodiment of the present application, the first anode may include a first anode tab, and the second anode may include a second anode tab, and the first anode tab and the second anode tab may be connected to an identical anode lead.

In a battery cell according to an example embodiment of the present application, in condition i), at least one or more constituent element in the cathode active material included in the first cathode active material layer may be different from the cathode active material included in the second cathode active material layer, or even if the cathode active material included in the first cathode active material layer and the cathode active material included in the second cathode active material layer are expressed with an identical chemical formula, composition ratios of elements that make up the chemical formula may be different.

In a battery cell according to an example embodiment of the present application, in condition i), each of the cathode active material included in the first cathode active material layer and the cathode active material included in the second cathode active material layer may independently include one or more compounds selected from the group consisting of a compound represented by Chemical Formula P1 below, a compound represented by Chemical Formula P2 below, and a compound represented by Chemical Formula P3 below, and, in Chemical Formula P1, Chemical Formula P2, and Chemical Formula P3, the cathode active material included in the first cathode active material layer and the cathode active material included in the second cathode active material layer may differ from each other in at least one element selected from the group consisting of A, M1, M2, and M3, or may differ from each other in at least one numerical value selected from the group consisting of a, x, y, and z.

[chemical formula P1] AₐM₁ₓM_{2y}M_{3z}O₂

[chemical formula P2] AₐM₁ₓM_{2y}M_{3z}(PO₄)

[chemical formula P3] AₐM₁ₓM_{2y}M_{3z}(CN)₆,

wherein, in the chemical formula P1, chemical formula P2 and chemical formula P3, A is lithium (Li), sodium (Na), or potassium (K), M₁, M₂ and M₃ may be one or more that are selected from a group of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other, each of x, y and z may independently be 0 or more and 1 or less, and may satisfy x+y+z=1, and in chemical formula P1, a may be 0.5 or more and 1.8 or less, in chemical formula P2, a may be 0.8 or more and 1.2 or less, and in chemical formula P3, a may be 0.8 or more and 2.2 or less.

In a battery cell according to an example embodiment of the present application, in condition i), an absolute value of a difference (W_{PA1}-W_{PA2}) between a content ratio (W_{PA1}) of the cathode active material included in the first cathode active material layer and a content ratio (W_{PA2}) of the cathode active material included in the second cathode active material layer may be 1% by weight or less.

In a battery cell according to an example embodiment of the present application, in condition ii), a content ratio (W_{PC1}) of a conductive material included in the first cathode active material layer may be greater than a content ratio (W_{PC2}) of a conductive material included in the second cathode active material layer.

In a battery cell according to an example embodiment of the present application, in condition ii), a difference (W_{PC1}-W_{PC2}) of a content ratio (W_{PC1}) of the conductive material included in the first cathode active material layer and a content ratio (W_{PC2}) of the conductive material included in the second cathode active material layer may be 3% by weight or greater.

In a battery cell according to an example embodiment of the present application, in condition ii), each of the content ratio (W_{PC1}) of the conductive material included in the first cathode active material layer and a content ratio (W_{PC2}) of the conductive material included in the second cathode active material layer may be independently 10% by weight or less.

In a battery cell according to an example embodiment of the present application, in condition ii), the cathode active material included in the first cathode active material layer and the cathode active material included in the second cathode active material layer may include an identical material.

In a battery cell according to an example embodiment of the present application, in condition ii), an absolute value of the difference (W_{PA1}-W_{PA2}) between the content ratio (W_{PA1}) of the cathode active material included in the first cathode active material layer and the content ratio (W_{PA2}) of the cathode active material included in the second cathode active material layer may be 3% by weight or more.

In a battery cell according to an example embodiment of the present application, in condition ii), each of the content ratio (W_{PA1}) of the cathode active material included in the first cathode active material layer and the content ratio (W_{PA2}) of the cathode active material included in the second cathode active material layer may independently be 80% by weight or more.

In a battery cell according to an example embodiment of the present application, the battery cell includes a cathode, an anode and a separator between the cathode and the anode, wherein the anode includes a first anode and a second anode, the first anode includes a first anode active material layer, and the second anode includes a second anode active material layer, each of the first anode active material layer and the second anode active material layer includes an anode active material, an anode binder and a conductive material, and the first anode and the second anode may satisfy at least one of following conditions.

### [Conditions]

condition iv) a main compound among the anode active material included in the first anode active material layer and a main compound among the anode active material included in the second anode active material layer are different from each other in at least one constituent element or in content ratio, condition v) content ratios of at least one of the anode active material, the anode binder, and the conductive material included in the first anode active material layer and the second anode active material layer are different from each other, or condition vi) that a loading amount (LW3) of a first anode active material composition forming the first anode active material layer and a loading amount (LW4) of a second anode active material composition forming the second anode active material layer are different.

In a battery cell according to an example embodiment of the present application, in condition v), a difference (W_{NC1}-W_{NC2}) between a content ratio (W_{NC1}) of a conductive material included in the first anode active material layer and a content ratio (W_{NC2}) of a conductive material included in the second anode active material layer may be 3% by weight or more.

In a battery cell according to an example embodiment of the present application, in condition v), an absolute value of a difference (W_{NA1}-W_{NA2}) between a content ratio (W_{NA1}) of an anode active material included in the first anode active material layer and a content ratio (W_{NA2}) of an anode active material included in the second anode active material layer may be 3% by weight or more.

### Effects of the Invention

According to an example of the present application, the battery cell may have excellent capacity retention, high-current output, and appropriate capacity by combining an electrode responsible for high capacity and an electrode responsible for high-current output. Further, the battery cell according to an example of the present application may flexibly respond to rapidly changing current output conditions while having appropriate capacity.

### BRIEF DESCRIPTION OF THE DRAWINGS

The drawings shown in the present application are according to examples of the present application. Further, the ratios of the width, length, or thickness (or height) of each element are for detailed description of the present disclosure, and the ratios may be different in reality. Further, in the coordinate system shown in the drawings, the axes may be perpendicular to each other, and the direction in which the arrow points is the + direction, and the direction opposite to the direction in which the arrow points thereto (rotated 180 degrees) is the - direction.
FIGS. 1, 2 and 3 each illustrate at least a part of a battery cell according to an example of the present application (a one-way terminal battery cell).
FIGS. 4, 5 and 6 each illustrate at least a part of a battery cell according to an example of the present application (a two-way terminal battery cell).
FIG. 7 is a capacity retention graph obtained based on battery cells manufactured in Examples 1 to 3, Comparative Example 1, and Comparative Example 2.
FIG. 8 is a charge/discharge graph obtained based on the battery cells manufactured in Examples 1 to 3, Comparative Example 1, and Comparative Example 2.
FIG. 9 is a capacity retention graph obtained based on battery cells manufactured in Example 4, Example 5, and Comparative Example 3.
FIG. 10 is a charge/discharge graph obtained based on the battery cells manufactured in Example 4, Example 5, and Comparative Example 3.
FIG. 11 is a capacity retention graph obtained based on battery cells manufactured in Example 6 and Comparative Example 4.
FIG. 12 is a charge/discharge graph obtained based on the battery cells manufactured in Example 6 and Comparative Example 4.
FIG. 13 is a graph showing current conditions obtained by simulating behavior of an electric vehicle or a hybrid vehicle in a manner similar to actual behavior in order to evaluate capacity retention in the present application.

### Mode for Carrying Out the Invention

Prior to the detailed description of the present disclosure, terms or words used in the specification and claims may not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described in detail with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

In the present disclosure, a battery may be used with the same meaning as a cell. Further, the term battery or cell may be a general term for their unit, or a battery module or battery pack including a battery cell. Further, a battery cell according to an example embodiment may be applied without limitation to any technical field that produces electric current through electron transport materials with a cathode and an anode. For example, as described above, a battery cell according to an example embodiment may be applied to the battery field as a secondary battery, and may also be applied to the fuel cells.

Room temperature, a term used in the present disclosure, is the natural temperature that is not heated or cooled. For example, the room temperature may indicate any temperature within the range of 10 °C to 30 °C, for example, a temperature of about 15 °C or higher, about 18 °C or higher, about 20 °C or higher, about 23 °C or higher, about 27 °C or lower, or 25 °C. In the present disclosure, the unit of temperature is Celsius (°C) unless otherwise specified. Further, in the present disclosure, among physical properties described, if the measurement temperature affects the physical properties, unless otherwise specified, the physical properties are measured at 25 °C.

Normal pressure, a term used in the present disclosure, is the natural pressure that is not pressurized or depressurized, and usually refers to an atmospheric pressure of about 700 mmHg to 800 mmHg. In the present disclosure, unless otherwise specified, the unit of pressure may be mmHg. Further, among the physical properties described in the present disclosure, if the measurement pressure affects the physical properties, the corresponding physical properties are measured at normal pressure, unless specifically stated otherwise.

Terms a to b used in the present disclosure includes a and b, and also indicates between a and b. For example, a part by weight to b part by weight indicates a part by weight and b part by weight, and also indicates between a part by weight and b part by weight.

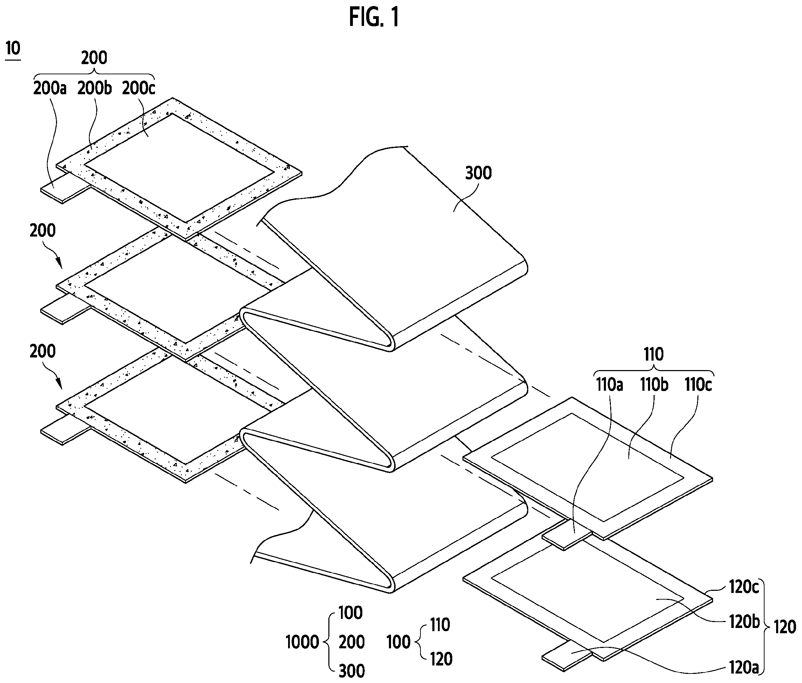

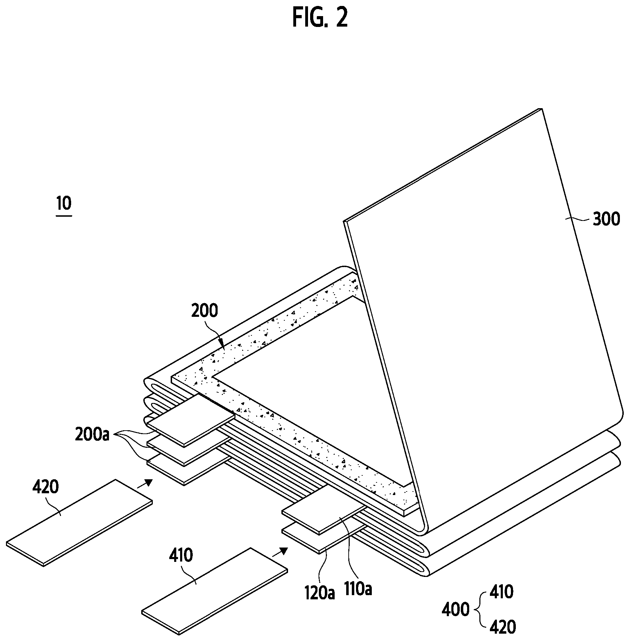

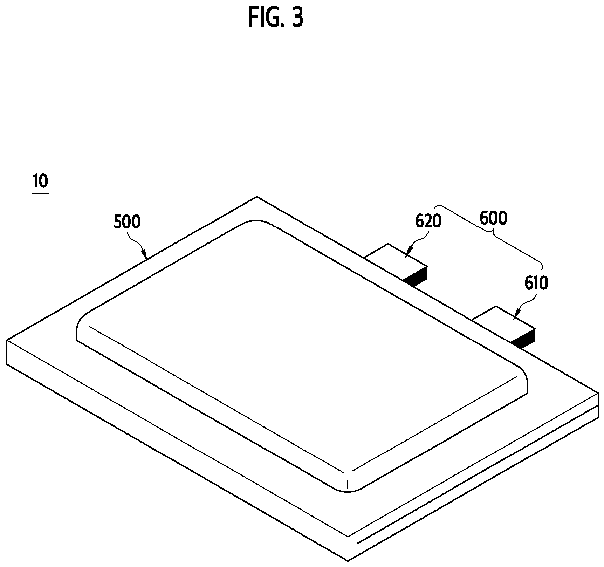

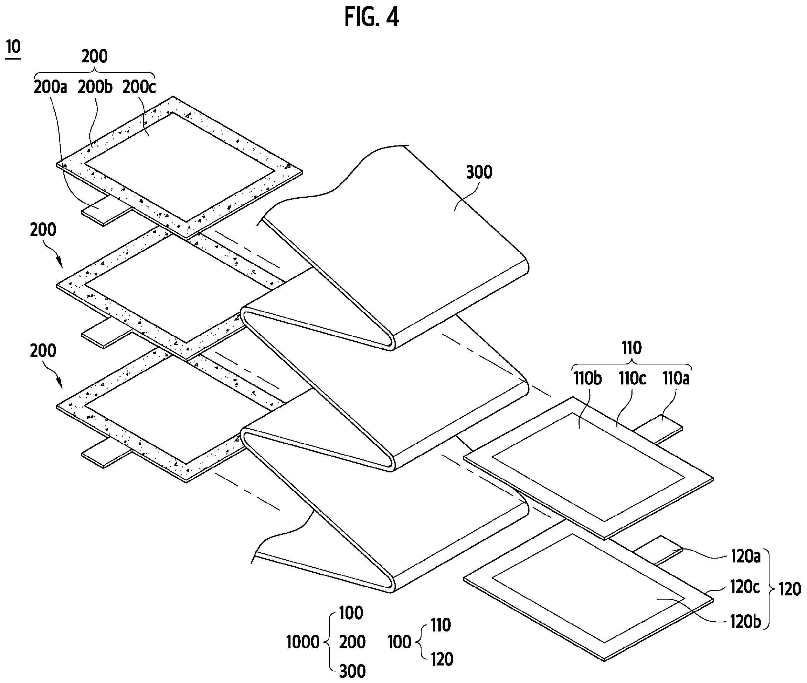

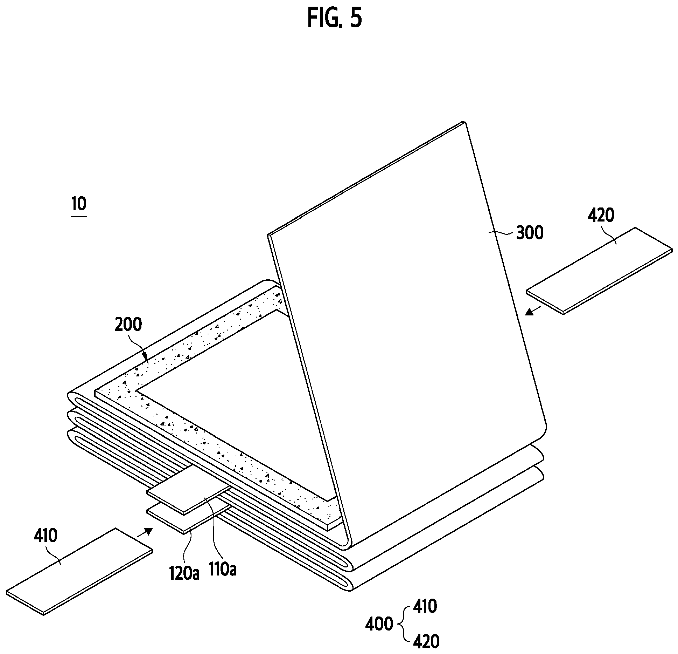

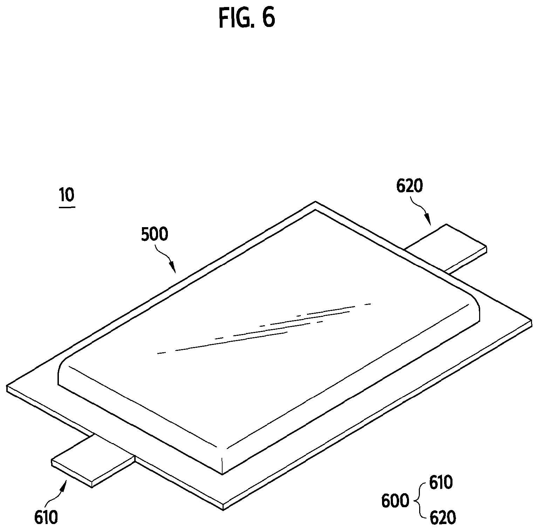

Each of FIGS. 1, 2 and 3 illustrates at least a part of a battery cell 10 according to an example embodiment (a one-way terminal battery cell). Each of FIGS. 4, 5 and 6 illustrates at least a part of a battery cell according to an example embodiment (a two-way terminal battery cell).

The present disclosure may provide the battery cell 10 that may secure excellent capacity retention, high current output and appropriate capacity by combining electrodes having high capacity and electrodes having high current output. Further, the present disclosure may provide the battery cell 10 that may have appropriate capacity and that may flexibly respond to rapidly changing current output conditions.

Further, the present disclosure may provide a battery module including the battery cell 10, and a battery pack containing one or more that are selected from a group consisting of the battery cell 10 and the battery module. Further, the present disclosure may provide a battery pack containing the battery cell 10 without the battery module, and here, the battery pack may be called "Cell to Pack." Further, the present disclosure may provide an electric vehicle with excellent output and improved mileage, including the battery cell 10.

The battery cell 10 may include one or more cathodes 100 and one or more anodes 200. Further, the battery cell 10 may have a structure in which a separator 300 is inserted between the cathode 100 and the anode 200. The battery cell 10 may include one or more electrode assemblies 1000. The electrode assembly 1000 may include the cathodes 100, the anodes 200 and the separators 300.

The cathode 100 may refer to a reduction electrode through which an electron transfer material receives electrons when the battery cell 10 is discharged. The anode 200 refers to an oxidation electrode though which an electron transfer material transfers electrons when the battery cell 10 is discharged. The separator 300 refers to a membrane that allows electron transfer materials to pass through while preventing an electrical short circuit between the cathode 100 and the anode 200. The electron transfer material may be, for example, lithium ions (Li⁺), natrium ions (Na⁺) or kalium ions (K⁺).

The electrode assembly 1000 may be manufactured by winding the cathode 100, the anode 200 and the separator 300 in the form of a long sheet in the longitudinal direction (so-called the winding method). Alternatively, the electrode assembly 1000 may be manufactured in a method that after a long sheet-shaped separator is made to be bent in a zigzag manner in the longitudinal direction, the cathodes 100 and the anodes 200 cut to appropriate sizes are alternately inserted into the space formed by the bending (so-called the zigzag method). FIGS. 1 and 4 show an example embodiment of the electrode assembly 1000 manufactured by the zigzag method, but the electrode assembly 1000 may also be manufactured by the winding method (not illustrated). Further, in addition to the winding method or the zigzag method, methods used in the industry for manufacturing the electrode assembly 1000 may be applied.

The battery cell 10 may be manufactured by electrically connecting each of the electrode tab and an electrode lead 400 and embedding them in a case 500 with electrolyte in the electrode assembly 1000. In the electrode assembly 1000, a first cathode tab 110a and a second cathode tab 120a and a cathode lead 410 may be electrically connected, and an anode tab 200a and an anode lead 420 may be electrically connected.

The battery cell 10 may include an electrode terminal 600 that is a part of the electrode lead 400 or electrically connected to the electrode lead 400 and has a structure protruding from the edge of the case 500. The electrode terminal 600 may include a cathode terminal 610 that is part of or electrically connected to the cathode lead 410, and an anode terminal 620 that is part of the anode lead 420 or is electrically connected thereto. FIGS. 1 to 3 illustrate the battery cell 10 in which the cathode terminal 610 and the anode terminal 620 protrude in the same direction, and the battery cell 10 with the structure may be called a one-way terminal battery cell 10. FIGS. 4 to 6 illustrate the battery cell 10 in which the cathode terminal 610 and the anode terminal 620 protrude in opposite directions, and the battery cell 10 with the structure may be called a two-way terminal battery cell 10. The direction of the electrode terminal 600 is not particularly limited, and its location may vary depending on need and design.

The cathode 100 may include a plurality of individual cathodes with distinct physical properties. The individual cathodes may be described in the present disclosure as a first cathode 110 and a second cathode 120. In other words, the cathode 100 may include the first cathode 110 and the second cathode 120 with distinct physical properties. Physical properties being distinguished may indicate that after a battery cell being manufactured, there are differences in the physical properties measured with the manufactured battery cell. Specifically, this may indicate that the physical properties of the battery cells are different when only the first cathode 110 or the second cathode 120 is used for the cathode and the anode and electrolyte as well as the physical property measurement method are all the same. Meanwhile, it is apparent to those skilled in the art that the cathode 100 may further include a third cathode with physical properties different from physical properties of the first cathode 110 and the second cathode 120. Below, the first cathode 110 and the second cathode 120 are explained, and an additional individual cathode such as the third cathode may include elements corresponding to the first cathode 110 and the second cathode 120, and descriptions with respect to the first cathode 110 and the second cathode 120 may be referred to for an additional individual cathode.

One of the first cathode 110 and the second cathode 120 may generate relatively high current output. Further, one of the first cathode 110 and the second cathode 120 may have a relatively high capacity.

Further, if one of the first cathode 110 and the second cathode 120 generates a relatively high current output, the other may have a relatively high capacity. As will be described later, in the present disclosure, the first cathode 110 may generate a higher current output than the second cathode 120, and the second cathode 120 may have a higher capacity than the first cathode 110.

The first cathode 110 may include a first cathode active material layer 110b. The first cathode 110 may include a first cathode current collector (not illustrated) and the first cathode active material layer 110b formed on one or both sides of the first cathode current collector. The first cathode active material layer 110b may be independently formed in a single layer or multi-layer structure on each side of the first cathode current collector. Further, an area in the first cathode 110 where the first cathode active material layer 110b is not formed may be referred to as a first cathode uncoated area 110c. The first cathode 110 may include a main body including the first cathode active material layer 110b and the first cathode uncoated area 110c, and may include the first cathode tab 110a extending from one edge of the main body.

In the electrode process, the first cathode tab 110a and the first cathode uncoated area 110c may be part of the first cathode current collector. The material used for the first cathode tab 110a and the first cathode uncoated area 110c may be the same as the material for the first cathode current collector. The type, size and shape of the first cathode current collector are not particularly limited as long as it has electrical conductivity without causing chemical changes in the battery cell 10. The first cathode current collector may include one or more that are selected from the group consisting of aluminum, stainless steel, nickel, titanium and those materials surface-treated with metal (for example, nickel, titanium or silver) or carbon. Preferably, aluminum may be included.

The first cathode current collector may have an appropriate thickness based on the capacity of the battery cell 10. For example, the thickness may be about 1 *µ*m to 500 *µ*m or less, 5 µm to 100 µm or less, or 8 µm to 30 µm or less.

The second cathode 120, like the first cathode 110, may include the second cathode tab 120a, a second cathode active material layer 120b and a second cathode uncoated area 120c. The description of the composition of the second cathode 120 may refer to the description of the corresponding composition in the first cathode 110 as long as there is no contradiction.

The first cathode tab 110a of the first cathode 110 and the second cathode tab 120a of the second cathode 120 may be connected to the same cathode lead 410. The first cathode tab 110a and the second cathode tab 120a may be electrically connected to the cathode lead 410. If at least one of the first cathode 110 and the second cathode 120 is plural, each first cathode tab 110a and each second cathode tab 120a may be electrically connected to the same cathode lead 410. As a result, by combining the electrode having high capacity and the electrode having high current output, excellent capacity retention, high current output and appropriate capacity may be secured. The method of electrical connection may be to align the first cathode tab 110a and the second cathode tab 120a and then weld them to the cathode lead 410, and pressurize during welding.

In the present disclosure, being electrically connected may indicate a state in which when objects to be connected are connected by a connecting means, an electric circuit is formed so that current may flow to each connected object. The connecting means is not particularly limited as long as electrical connection is possible, and the connecting means may be direct contact between the objects being connected or a wire through which current may flow.

The physical properties of the first cathode 110 and the second cathode 120 may be distinguished by the characteristics of each of the first cathode active material layer 110b and the second cathode active material layer 120b. The distinct physical properties of the first cathode 110 and the second cathode 120 may be attributed to each of the first cathode active material layer 110b and the second cathode active material layer 120b.

Each of the first cathode active material layer 110b and the second cathode active material layer 120b may include a cathode active material, a cathode binder and a conductive material. The cathode active material may include a compound capable of reversible intercalation and deintercalation with respect to lithium ions (Li⁺), natrium ions (Na⁺) or kalium ions (K⁺). The cathode may contain compounds that may improve the internal adhesion of each of the first cathode active material layer 110b and the second cathode active material layer 120b and the adhesion of each of the first cathode active material layer 110b and the second cathode active material layer 120b with each cathode current collector. The conductive material may include a compound that may improve the conductivity of each of the first cathode active material layer 110b and the second cathode active material layer 120b and the mobility of ions or electrons.

Further, each of the first cathode active material layer 110b and the second cathode active material layer 120b may be formed by a cathode active material composition, and the cathode active material composition may be applied on each cathode current collector and then dried to form the first cathode active material layer 110b and the second cathode active material layer 120b. Unlike the first cathode active material layer 110b and the second cathode active material layer 120b, the cathode active material composition may further include a solvent for processibility. In the present disclosure, drying may indicate a process in which the solvent contained in the cathode active material composition is removed so that it is included 1% by weight or less, 0.5% by weight or less, or 0.1% by weight or less (or, 0% by weight) compared to total weight. In other words, the first cathode active material layer 110b and the second cathode active material layer 120b may indicate a state in which the cathode active material composition is dried. The drying method is not particularly limited and may be performed, for example, by hot air or infrared irradiation. Further, application may be carried out according to known methods. For example, the application may be performed by a method using a slot die, a doctor blade method, a dip method, a reverse roll method, a direct roll method, a gravure method, an extrusion method or a brushing method. Further, the cathode active material composition may be applied in an appropriate loading amount based on the thickness of the first cathode active material layer 110b and the second cathode active material layer 120b. Further, the first cathode active material layer 110b and the second cathode active material layer 120b may be rolled for miniaturization and higher energy density of the battery cell 10. The rolling may be performed according to a known method, for example, through a rolling jig.

The first cathode active material layer 110b may be formed of a first active material composition, and the second cathode active material layer 120b may be formed of a second cathode active material composition. Each of the first cathode active material composition and the second cathode active material composition independently includes a cathode active material, a cathode binder and a conductive material, and may include a solvent. The solvent may be determined depending on the materials included in the cathode active material composition, and the solvent is not particularly limited as long as it is used in the industry. The solvent may include, for example, an aqueous solvent such as water (deionized water or ultrapure water, etc.), an organic solvent, or a mixed solvent of two or more types. For example, the solvent may include organic solvents such as -methyl-2- pyrrolidone (NMP), propylene carbonate, ethylene carbonate (EC), n-butylene carbonate, dimethyl carbonate (DMC), diethyl carbonate (DEC), ethylene oxide, gamma-Butyrolactone, 1,2-dimethoxy ethane, tetrahydrofuran, 2-methyltetrahydrofuran, diMethyl sulfoxide, formamide, dimethylformamide, dimethylacetamide, N,N-dimethylaminopropylamine, acetonitrile, nitromethane, mMethyl formate, methyl acetate, triethyl phosphate, trimethoxymethane, sulfolane, methyl sulfolane, 1,3-dimethyl-2-imidazolidinone, propylene carbonate derivatives, tetrahydrofuran derivatives, methyl propionate, ethyl propionate and alcohol, or the solvent may include an aqueous solvent such as water. Preferably, the cathode active material composition may include an organic solvent, and specifically, NMP.

Meanwhile, the cathode active material composition may further include a thickening agent and/or dispersant, if necessary. For example, the cathode active material composition may further include a thickening agent such as carboxymethyl cellulose (CMC).

The first cathode 110 and the second cathode 120 may satisfy at least one of the following conditions. However, if the physical properties of the first cathode 110 and the second cathode 120 can be distinguished, the first cathode 110 and the second cathode 120 are not limited to the following conditions and various conditions may be applied.

### [Conditions]

Condition i) The cathode active material included in the first cathode active material layer 110b of the first cathode 110 and the cathode active material included in the second cathode active material layer 120b of the second cathode 120 are different materials.

Condition ii) The content ratio of at least one of the cathode active material, the cathode binder and the conductive material included in the first cathode active material layer 110b of the first cathode 110 and the second cathode active material layer 120b of the second cathode 120 is different.

Condition iii) The loading amount (LW1) of the first cathode active material composition forming the first cathode active material layer 110b of the first cathode 110 and the loading amount (LW2) of the second cathode active material composition forming the second cathode active material layer 120b of the second cathode 120 are different.

As described above, in addition to the above conditions, there may also be a condition that the types of cathode binder included in the first cathode active material layer 110b and the cathode binder included in the second cathode active material layer 120b are different, or a condition with different types of conductive materials. Further, there may be a condition that the thickness (D1) of the first cathode active material layer 110b of the first cathode 110 and the thickness (D2) of the second cathode active material layer 120b of the second cathode 120 are different. In the present disclosure, the thickness may be measured via a contact or noncontact thickness gauge (for example, ultrasonic or laser). When the thickness is constant, the constant thickness value may refer to the thickness of the present disclosure, and if the thickness is not constant depending on the location, the average thickness value may refer to the thickness in the present disclosure. The average thickness may indicate a value that is obtained when a thickness profile according to location is obtained and an area (the value obtained by integrating the thickness function according to location over all locations when the vertical axis is called thickness and the horizontal axis is called position) obtained through the profile is divided by the distance moved to measure the thickness. In other words, if the physical properties of the first cathode 110 and the second cathode 120 can be distinguished, the conditions are not particularly limited.

"The cathode active material included in the first cathode active material layer 110b of the first cathode 110 and the cathode active material included in the second cathode active material layer 120b of the second cathode 120 are different materials" in Condition i) indicates that at least one constituent element is a different material, or that the composition ratio (for example, molar ratio) of the elements that make up the chemical formula is different even if expressed by the same chemical formula.

Meanwhile, in the present disclosure, the lithium compound, the natrium compound or the kalium compound used as the cathode active material may have a layered structure, a crystal structure or a combination thereof. Further, in the present disclosure, the lithium compound may be a concept that encompasses all compounds in which auxiliary elements, coating elements and doping elements are introduced or substituted around the main active element. The main active element may include, for example, one or more that are selected from the group consisting of nickel (Ni), cobalt (Co), manganese (Mn) and aluminum (Al). The auxiliary element, the coating element and the doping element are elements that may improve the structural and chemical stability of the cathode active material in combination with the main active element, and the auxiliary element, the coating element and the doping element may be distinguished on how they are combined with the main active element. Here, "combined with the main active element" may include chemically bonding with the main active element or existing on the surface of the cathode active material or penetrating from the surface. Further, for example, each of the auxiliary element, the coating element and the doping element may independently include one or more that are selected from a group consisting of group 1 elements, group 2 elements, group 13 elements, group 14 elements, group 15 elements, group 16 elements and transition metals in the periodic table, excluding lithium. Specifically, for example, each of the auxiliary elements, the coating elements and the doping elements may independently include one or more that are selected from a group consisting of natrium (Na), magnesium (Mg), calcium (Ca), yttrium (Y), titanium (Ti), hafnium (Hf), vanadium (V), niobium (Nb), tantalum (Ta), chrome (Cr), molybdenum (Mo), tungsten (W), iron (Fe), copper (Cu), silver (Ag), zinc (Zn), boron (B), gallium (Ga), carbon (C), silicon (Si), tin (Sn), strontium (Sr), barium (Ba), radium (Ra), phosphorus (P) and zirconium (Zr).

In the present disclosure, the cathode active material may include one or more compounds selected from a group consisting of a compound represented by following Chemical formula P1, a compound represented by following Chemical formula P2 and a compound represented by following Chemical formula P3.

[Chemical formula P1] AₐM₁ₓM_{2y}M_{3z}O₂

In Chemical formula P1, A is lithium (Li), natrium (Na) or kalium (K), and a is 0.5 or more to 1.8 or less. M₁, M₂ and M₃ are one or more selected from a group consisting of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other. Each of x, y and z is independently 0 or more and 1 or less, and satisfies x+y+z=1.

[Chemical formula P2] AₐM₁ₓM_{2y}M_{3z}(PO₄)

In Chemical formula P2, A is lithium (Li), natrium (Na) or kalium (K), and a is 0.8 or more to 1.2 or less. M₁, M₂ and M₃ are one or more selected from a group consisting of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other. Each of x, y and z is independently 0 or more and 1 or less, and satisfies x+y+z=1.

[Chemical formula P3] AₐM₁ₓM_{2y}M_{3z}(CN)₆

In Chemical formula P3, A is lithium (Li), natrium (Na) or kalium (K), and a is 0.8 or more to 2.2 or less. M₁, M₂ and M₃ are one or more selected from a group consisting of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other. Each of x, y and z is independently 0 or more and 1 or less, and satisfies x+y+z=1.

In Condition i), each of the cathode active material included in the first cathode active material layer 110b and the cathode active material included in the second cathode active material layer 120b may independently include one or more compounds selected from a group consisting of a compound represented by Chemical formula P1, a compound represented by Chemical formula P2 and a compound represented by Chemical formula P3. Further, as for the cathode active material included in the first cathode active material layer 110b and the cathode active material included in the second cathode active material layer 120b, in following Chemical formula P1, Chemical formula P2 and Chemical formula P3, one or more elements selected from the group consisting of A, M₁, M₂ and M₃ may be different, or a numeral value of one or more selected from the group consisting of a, x, y and z may be different. Through this, the physical properties of the first cathode 110 and the second cathode 120 may be distinguished.

[Chemical formula P1] AₐM₁ₓM_{2y}M_{3z}O₂

[Chemical formula P2] AₐM₁ₓM_{2y}M_{3z}(PO₄)

[Chemical formula P3] AₐM₁ₓM_{2y}M_{3z}(CN)₆

In Chemical formula P1, Chemical formula P2 and Chemical formula P3, A is lithium (Li), natrium (Na) or kalium (K), and M₁, M₂ and M₃ are one or more selected from a group consisting of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other. Each of x, y and z is independently 0 or more and 1 or less, and satisfies x+y+z=1. In Chemical formula P1, a is 0.5 or more and 1.8 or less, and in Chemical formula P2, a is 0.8 or more and 1.2 or less, and in Chemical formula P3, a is 0.8 or more and 2.2 or less.

In Condition i), the cathode active material included in the first cathode active material layer 110b may not be included in the second cathode active material layer 120b. For example, the cathode active material included in the first cathode active material layer 110b may include a lithium compound, a natrium compound or a kalium compound containing nickel (Ni) as a constituent element. Further, the cathode active material included in the second cathode active material layer 120b may include a lithium compound a natrium compound or a kalium compound that does not contain nickel (Ni) as a constituent element.

In Condition i), the cathode active material included in the first cathode active material layer 110b may include one or more selected from the group consisting of nickel-cobalt-manganese oxides (NCM), nickel-cobalt-aluminium oxides (NCA) and nickel-cobalt-manganese-aluminium oxides (NCMA). Each of NCM, NCA and NCMA may independently be combined with lithium (Li), natrium (Na) or kalium (K).

Nickel (Ni) is one of the transition metals related to the output and capacity of battery cells, and the cathode active material included in the first cathode active material layer 110b may have a high nickel content ratio (so-called high nickel). However, if the ratio of nickel (Ni) simply increases, the storage stability and life stability of the battery cell may rapidly deteriorate, and side reactions with electrolytes may increase, resulting in electrolyte consumption, and thus a cathode active material may be used in which an appropriate content of cobalt (Co), manganese (Mn) or aluminium (Al) as the main active element is composed.

A high nickel ratio may indicate a case when the total number of moles of the main active element in the cathode active material is 1 mol, the nickel (Ni) is 0.6 mol or more, 0.65 mol or more, 0.7 mol or more, 0.75 mol or more, 0.8 mol or more, 0.82 mol or more, 0.83 mol or more, 0.84 mol or more, 0.85 mol or more, or 0.88 mol or more, or the nickel is 0.95 mol or less, 0.94 mol or less, 0.93 mol or less, 0.92 mol or less, 0.91 mol or less, or 0.9 mol or less.

In Condition i), the cathode active material included in the second cathode active material layer 120b may include one or more selected from the group consisting of cobalt oxide (LCO), manganese oxide (LMO), and iron phosphate (LFP). Each of the cobalt oxide (LCO), manganese oxide (LMO), and iron phosphate (LFP) may be independently combined with lithium (Li), natrium (Na) or kalium (K).

It is known that the cathode active material that may be included in the first cathode active material layer 110b may generate relatively high current output compared to the cathode active material that may be included in the second cathode active material layer 120b. Therefore, the first cathode 110 may generate higher current output than the second cathode 120.

Meanwhile, it is known that the cathode active material that may be included in the second cathode active material layer 120b may have a relatively high capacity compared to the cathode active material that may be included in the first cathode active material layer 110b. Therefore, the second cathode 120 may have higher capacity than the first cathode 110. By combining the first cathode 110 and the second cathode 120 with the characteristics and electrically connecting those with the same cathode lead 410, excellent capacity retention, high current output and appropriate capacity may be secured.

Not specifically limited but, for example, in Condition i), only the cathode active material included in the first cathode active material layer 110b and the cathode active material included in the second cathode active material layer 120b are different, and other conditions may be substantially the same.

For example, one or more or all of the cathode active material, the binder and the conductive material included in each of the first cathode active material layer 110b and the second cathode active material layer 120b may have substantially the same content ratio. Here, "substantially the same content ratio" indicates that the absolute value of the difference in content ratio of each component included in the first cathode active material layer 110b and the second cathode active material layer 120b is 1% or less, 0.5% or less, or 0.1% or less. In the present disclosure, the content ratio may indicate the weight percent of the material in question compared to the total weight.

For example, in Condition i), the absolute value of the difference (W_{PA1}-W_{PA2}) between the content ratio (W_{PA1}) of the cathode active material included in the first cathode active material layer 110b and the content ratio (W_{PA2}) of the cathode active material included in the second cathode active material layer 120b may be 1% or less, 0.5% or less, or 0.1% or less. Further, in Condition i), the absolute value of the difference (W_{PB1}-W_{PB2}) between the content ratio (W_{PB1}) of the cathode binder included in the first cathode active material layer 110b and the content ratio (W_{PB2}) of the cathode binder included in the second cathode active material layer 120b may be 1% or less, 0.5% or less, or 0.1% or less. Further, in Condition i), the absolute value of the difference (W_{PC1}-W_{PC2}) between the content ratio (W_{PC1}) of the conductive material included in the first cathode active material layer 110b and the content ratio (W_{PC2}) of the conductive material included in the second cathode active material layer 120b may be 1% or less, 0.5% or less, or 0.1% or less.

Not specifically limited but, in Condition i), each cathode active material included in each of the first cathode active material layer 110b and the second cathode active material layer 120b may independently be included 80% by weight or more, 81% by weight or more, 82% by weight or more, 83% by weight or more, 84% by weight or more, 85% by weight or more, 86% by weight or more, 87% by weight or more, 88% by weight or more, 89% by weight or more, 90% by weight or more, 91% by weight or more, 92% by weight or more, 93% by weight or more, 94% by weight or more, 95% by weight or more, 96% by weight or more when compared to the total weight, or 99% by weight or less or 98% by weight or less when compared to the total weight. The content ratio of the cathode active material may be within a range formed by appropriately selecting the above-described upper and lower limits. If the content ratio of the cathode active material satisfies the above range, appropriate energy capacity may be secured while generating excellent current output. Further, for the content of the cathode active material included in the cathode active material layer when using a single cathode without an individual cathode, the above descriptions may be referred to. For a case where a single cathode is used, the type and content of each element included in the cathode active material layer may be referred to.

Not specifically limited but, in Condition i), each cathode binder included in the first cathode active material layer 110b and the second cathode active material layer 120b may independently be included 0.1 part by weight or more, 0.5 part by weight or more, 1 part by weight or more, 2 parts by weight or more, 3 parts by weight or more, 4 parts by weight or more, or 5 parts by weight or more compared to 100 parts by weight of the cathode active material, or 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less compared to 100 parts by weight of the cathode active material. The content ratio of the cathode binder may be within a range formed by appropriately selecting the above-described upper and lower limits. If the content ratio of the cathode binder satisfies the above range, stability may be ensured by increasing the internal cohesion of the cathode active material layer and improving the adhesion with the cathode current collector.

Further, for example, in Condition i), each cathode binder included in each of the first cathode active material layer 110b and the second cathode active material layer 120b may independently include one or more selected from the group consisting of Polyvinylidene fluoride (PVDF), polyvinyl alcohol, styrene butadiene rubber (SBR), polyethylene oxide, carboxymethyl cellulose (CMC), cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate and polyarylate. However, the cathode binder is not limited thereto. It may be desirable for each cathode binder included in the first cathode active material layer 110b and the second cathode active material layer 120b independently includes one or more selected from the group consisting of PVDF, polyvinyl alcohol, SBR and polyethylene oxide. Here, PVDF may include not only mono PVDF but also copolymers copolymerized with hexafluoropropene (HFP) or chlorotrifluoroethylene (CTFE).

Not specifically limited but, for example, in Condition i), each conductive material included in the first cathode active material layer 110b and the second cathode active material layer 120b may independently be included 0.1 parts by weight or more, 0.5 parts by weight or more, 1 part by weight or more, 2 parts by weight or more, 3 parts by weight or more, 4 parts by weight or more, or 5 parts by weight or more, based on 100 parts by weight of the cathode active material, or may be included 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less, based on the 100 parts by weight of the cathode active material. The content ratio of the conductive material may be within a range formed by appropriately selecting the above-described upper and lower limits. If the content ratio of the conductive material satisfies the above range, better conductivity may be provided.

Further, for example, in Condition i), each conductive material included in each of the first cathode active material layer 110b and the second cathode active material layer 120b is not particularly limited as long as the conductive material is used in the industry, and the conductive material may include carbon-based conductive materials such as graphite, carbon black, acetylene black, Ketjen black, graphene, carbon nanotube (CNT), vapor-grown carbon fiber (VGCF) and carbon fiber, and/or metal-based conductive materials including tin, tin oxide, titanium oxide, and perovskite materials such as LaSrCoO₃ and LaSrMnO₃. CNTs may include one or more selected from the group consisting of Multi-Walled Nanotube (MWCNT) and Single-Walled Nanotube (SWCNT) depending on the number of walls.

In Condition ii), the content ratio (W_{PC1}) of the conductive material included in the first cathode active material layer 110b of the first cathode 110 may be greater than the content ratio (W_{PC2}) of the conductive material included in the second cathode active material layer 120b of the second cathode 120. Conductive materials may improve conductivity and the mobility of ions or electrons, as described above, and thus the grater the content of conductive material, the more advantageous it may be for current output. On the other hand, as the content of conductive material increases, the content ratio of cathode active material decreases, and thus this may be disadvantageous in terms of capacity. That is, the physical properties of the first cathode 110 and the second cathode 120 can be distinguished by varying the content of the conductive material contained in each of the first cathode active material layer 110b and the second cathode active material layer 120b.

In Condition ii), the difference (W_{PC1}-W_{PC2}) between the content ratio (W_{PC1}) of the conductive material included in the first cathode active material layer 110b of the first cathode 110 and the content ratio (W_{PC2}) of the conductive material included in the second cathode active material layer 120b of the second cathode 120 may be at least 3% by weight, at least 3.2% by weight, at least 3.4% by weight, at least 3.6% by weight, at least 3.8% by weight, or at least 4% by weight, or may be 9.5% by weight or less, 9% by weight or less, 8% by weight or less, 7% by weight or less, 6% by weight or less, or 5% by weight or less. The absolute value of the difference in content ratio (W_{PC1}-W_{PC2}) of the conductive material may be within the range formed by appropriately selecting the above-described upper and lower limits. That is, the physical properties of the first cathode 110 and the second cathode 120 can be distinguished by varying the content of the conductive material contained in each of the first cathode active material layer 110b and the second cathode active material layer 120b.

In Condition ii), each of the content ratio (W_{PC1}) of the conductive material included in the first cathode active material layer 110b of the first cathode 110 and the content ratio (W_{PC2}) of the conductive material included in the second cathode active material layer 120b of the second cathode 120 may independently be 10% by weight or less, 9.5% by weight or less, 9% by weight or less, 8.5% by weight or less, 8% by weight or less, 7.5% by weight or less, 7% by weight or less, 6.5% by weight or less, 6% by weight or less, 5.5% by weight or less, or 5% by weight or less compared to the total weight, or may be 0.1% by weight or more, 0.5% by weight or more, or 1% by weight or more compared to the total weight. The content ratio of the conductive material may be within a range formed by appropriately selecting the above-described upper and lower limits. For the type of conductive material, the information described in Condition i) above may be referred to.

In Condition ii), the cathode active material included in the first cathode active material layer 110b of the first cathode 110 and the cathode active material included in the second cathode active material layer 120b of the second cathode 120 may include the same material. Here, the same material may indicate a lithium compound with the same main active element. In other words, even if the ratio (e.g., molar ratio) between elements in a lithium compound is different, if the main active element is the same, it may be considered the same material. For example, in Condition ii), Lithium NCM (Li-NCM) with nickel (Ni): cobalt (Co): manganese (Mn) at a molar ratio of 8:1:1 and Li-NCM with nickel (Ni): cobalt (Co): manganese (Mn) at 6:2:2 (mol ratio) may be considered the same material since the main active elements are nickel, cobalt and manganese.

In Condition ii), the cathode active material included in the first cathode active material layer 110b of the first cathode 110 and the cathode active material included in the second cathode active material layer 120b of the second cathode 120 are the same material, and the material may include one or more that are selected from the group consisting of Li-NCM, Li-NCA, Li-NCMA, lithium cobalt oxide (LCO), lithium manganese oxide (LMO) and lithium iron phosphate (LFP). For information on the cathode active material, please refer to the information described in Condition i) above.

In Condition ii), the absolute value of the difference (W_{PA1}-W_{PA2}) between the content ratio (W_{PA1}) of the cathode active material included in the first cathode active material layer 110b of the first cathode 110 and the content ratio (W_{PA2}) of the cathode active material included in the second cathode active material layer 120b of the second cathode 120 may be 3% by weight or more, 3.5% by weight or more, 4% by weight or more, 4.5% by weight or more, 5% by weight or more, 5.5% by weight or more, 6% by weight or more, 6.5% by weight or more, 7% by weight or more, 7.5% by weight or more or 8% by weight or more, or may be 9.5% by weight or less, 9% by weight or less, or 8.5% by weight or less, even though not limited specifically. In Condition ii), the absolute value of the difference in content ratio (W_{PA1}-W_{PA2}) of the cathode active material may be within the range formed by appropriately selecting the above-described upper and lower limits.

Not specifically limited but, for example, in Condition ii), each cathode active material included in the first cathode active material layer 110b and the second cathode active material layer 120b may independently be 80% by weight or more, 81% by weight or more, 82% by weight or more, 83% by weight or more, 84% by weight or more, 85% by weight or more, 86% by weight or more, 87% by weight or more, 88% by weight or more, 89% by weight or more, 90% by weight or more, 91% by weight or more, 92% by weight or more, 93% by weight or more, 94% by weight or more, 95% by weight or more or 96% by weight or more, compared to the total weight, or may be 99% by weight or less or 98% by weight or less, compared to the total weight. The content ratio of the cathode active material may be within a range formed by appropriately selecting the above-described upper and lower limits. If the content ratio of the cathode active material satisfies the above range, appropriate energy capacity may be secured while generating excellent current output.

Not specifically limited but, for example, in Condition ii), each cathode binder included in the first cathode active material layer 110b and the second cathode active material layer 120b may independently be 0.1 part by weight or more, 0.5 part by weight or more, 1 part by weight or more, 2 parts by weight or more, 3 parts by weight or more, 4 parts by weight or more or 5 parts by weight or more, compared to 100 pars by weight of the cathode active material, or may be 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less or 10 parts by weight or less, compared to 100 parts by weight of the cathode active material. The content ratio of the cathode binder may be within a range formed by appropriately selecting the above-described upper and lower limits. If the content ratio of the cathode binder satisfies the above range, stability may be ensured by increasing the internal cohesion of the cathode active material layer and improving the adhesion with the cathode current collector. For the type of cathode binder, the information described in Condition i) above may be referred to.

Meanwhile, the first cathode 110 and the second cathode 120 may be distinguished by CP_{R,n} when n is 100 in following formula R. The second cathode 120 may have a higher CP_{R,n} when n is 100 in the equation R below compared to the first cathode 110. [Formula R] ${CP}_{R , n} = {CP}_{n} / {CP}_{1} \times 100$

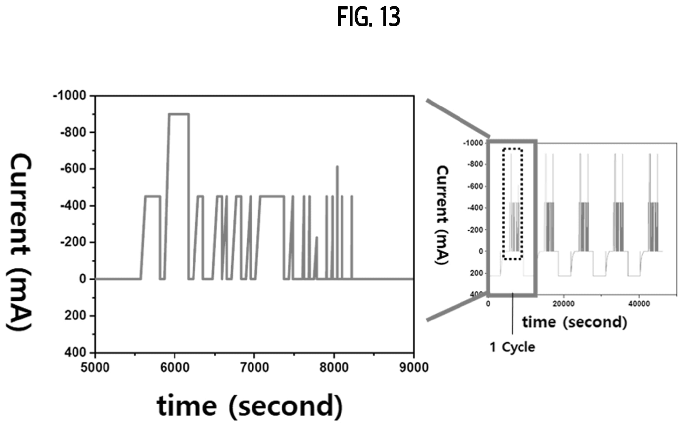

In Formula R, CPₙ indicates n cycle discharge capacity, and CP₁ indicates 1 cycle discharge capacity. The method of measuring cycle discharge capacity is not particularly limited as long as it is used in the industry. For example, cycle discharge capacity may be measured using a method in which under conditions where 25 °C is maintained, it is charged at 0.3C to the voltage (charge voltage) corresponding to SOC98 under constant current/constant voltage (CC/CV) conditions and then cut-off at 0.05C, and under constant current (CC) conditions, it is discharged at 0.3C up to the voltage (discharge voltage) corresponding to SOC4, and its discharge capacity is measured. Further, for example, the cycle discharge capacity may be measured according to the capacity retention evaluation method in [Method for measuring physical properties] below (see FIG. 13). Additionally, the cycle discharge capacity according to formula R may be measured for a battery cell including the first cathode 110 or second cathode 120. Here, for comparison, after manufacturing a battery cell by changing only the type of cathode and using the same anode and electrolyte as well as the physical property measurement method, the cycle discharge capacity can be measured by referring to the method described above.

The second cathode 120 may be selected by appropriately varying the constituent elements or content ratios of the cathode active material included in the first cathode active material layer 110b and the cathode active material included in the second cathode active material layer 120b, in order for CP_{R,n} to be higher when n is 100 in the formula R below compared to first cathode 110. Further, the content ratio of at least one of the cathode active material, the cathode binder, and the conductive material included in each of the first cathode active material layer 110b and the second cathode active material layer 120b may be appropriately selected.

The ratio (N₁/N₂) of the number of first cathodes (N₁) and the number of second cathodes (N₂) may be 10 or less, 9 or less, 8 or less, 7 or less, 6 or less, or 5 or less, or may be 0.1 or greater, 0.5 or greater, 1 or greater, 2 or greater, 3 or greater, or 4 or greater. The ratio (N₁/N₂) of the number of first cathodes (N₁) and the number of second cathodes (N₂) may be within a range formed by appropriately selecting the above-described upper and lower limits. If the ratio (N₁/N₂) of the number of first cathodes (N₁) and the number of second cathodes (N₂) satisfies the above-stated range, by combining individual cathodes with distinct physical properties, excellent capacity retention, high current output, and appropriate capacity may be secured. Meanwhile, the number of first cathodes (N₁) and the number of second cathodes (N₂) may be measured targeting the first cathode 110 and second cathode 120 connected to the same cathode lead 410.

The number of first cathodes (N₁) may be 95% or less, 90% or less, 85% or less, 80% or less, 75% or less, 70% or less, 65% or less, 60% or less, 55% or less, or 50% or less compared to the total number of cathodes (N_{T}), or may be 5% or more, 10% or more, 15% or more, 20% or more, 25% or more, 30% or more, 35% or more, 40% or more, or 45% or more (not including 100%) compared to the total number of cathodes (N_{T}). The number of first cathodes (N₁) may be within a range formed by appropriately selecting the above-described upper and lower limits. The total number of cathodes (N_{T}) refers to the total number of cathodes, including the first cathode 110 and second cathode 120 connected to the same cathode lead 410, and the number of first cathodes (N₁) refers to the number of first cathodes 110 connected to the cathode lead 410.

The number of second cathodes (N₂) may be 95% or less, 90% or less, 85% or less, 80% or less, 75% or less, 70% or less, 65% or less, 60% or less, 55% or less, or 50% or less compared to the total number of cathodes (N_{T}), or may be 5% or more, 10% or more, 15% or more, 20% or more, 25% or more, 30% or more, 35% or more, 40% or more, or 45% or more (not including 100%) compared to the total number of cathodes (N_{T}). The number of second cathodes (N₂) may be within a range formed by appropriately selecting the above-described upper and lower limits. The total number of cathodes (N_{T}) refers to the number of total cathodes such as the first cathode 110 and the second cathode 120 connected to the same cathode lead 410, and the number of second cathodes (N₂) refers to the number of second cathodes 120 connected to the cathode lead 410.

The number of first cathodes (N₁) and the number of second cathodes (N₂) compared to the total number of cathodes (N_{T}) are naturally influenced by the number of first cathodes 110 and second cathodes 120. For example, in the cathodes 100, which include only the first cathode 110 and the second cathode 120, if the first cathode 110 is prepared in a number of about 60% of the total number of cathodes (N_{T}), the second cathode 120 is prepared in a number of about 40% of the total number of cathodes (N_{T}).

The anode 200 may include an anode active material layer 200b. The anode 200 may include an anode current collector (not illustrated) and the anode active material layer 200b formed on one or both sides of the anode current collector. The anode active material layer 200b may be independently formed in a single layer or multi-layer structure on each side of the anode current collector. Additionally, an area of the anode 200 where the anode active material layer 200b is not formed may be referred to as an anode uncoated area 200c. Meanwhile, the anode 200 may include a main body including the anode active material layer 200b and the anode uncoated area 200c, and may include the anode tab 200a extending from one edge of the main body.

In the electrode process, the anode tab 200a and the anode uncoated area 200c may be part of the anode current collector. The material used for the anode tab 200a and the anode uncoated area 200c may be the same as the material for the anode current collector. The type, size, and shape of the anode current collector are not particularly limited as long as it has electrical conductivity without causing chemical changes in the battery cell 10. The anode current collector may include one or more selected from the group consisting of copper, stainless steel, nickel, titanium, and those materials surface-treated with metal (for example, nickel, titanium or silver) or carbon. Preferably, the anode current collector may contain copper.

The anode current collector may have an appropriate thickness based the capacity of the battery cell 10. For example, the anode current collector thickness may be about 1 µm to 500 *µ*m or less, 5 *µ*m to 100 µm or less, or 8 µm to 50 µm or less.

The anode 200 may include a plurality of individual anodes with distinct physical properties. Individual anodes may be described in the present disclosure as a first anode, a second anode, and so on. That is, the anode 200 may include a first anode and a second anode with distinct physical properties. Physical properties being distinguished may indicate that after a battery cell being manufactured, there are differences in the physical properties measured with the manufactured battery cell. Specifically, physical properties being distinguished may indicate that the physical properties of the battery cell are different when only, for the anode, the first anode or the second anode is used, but the cathode and electrolyte as well as the physical property measurement method are all the same. Meanwhile, it is apparent to those skilled in the art that the anode 200 may further include a third anode with physical properties different from physical properties of the first anode and the second anode. Below, the first anode and the second anode are explained, and an additional individual anode such as the third anode may include elements corresponding to the first anode and the second anode, and descriptions with respect to the first anode and the second anode may be referred to for an additional individual anode.

One of the first anode and the second anode may have relatively high capacity. Additionally, either the first anode or the second anode may generate relatively high current output. Further, if one of the first anode and the second anode generates relatively high current output, the other may have relatively high capacity. For example, in the present disclosure, the first anode may generate higher current output than the second anode, and the second anode may have higher capacity than the first anode.

Unless contradictory, the structure of the anode 200 described above may be reference for the first anode and the second anode, and each of the first anode and the second anode may independently contain an anode active material layer. That is, the first anode may include the first anode active material layer, and the second anode may include the second anode active material layer.

The first anode may include the first anode tab, and the second anode may include the second anode tab. The first anode tab and the second anode tab may be connected to the same anode lead 420. The first anode tab and the second anode tab may be electrically connected to the anode lead 420. If at least one of the first anode and second anode is plural, each first anode tab and each second anode tab may be electrically connected to the same anode lead 420. As a result, it is possible to secure excellent capacity retention, high current output, and appropriate capacity by combining anodes with distinct physical properties. The method of electrically connecting may be to align the second anode tab and the second anode tab and then weld the tabs to the anode lead 420, and the tabs may be pressurized during welding.

The physical properties of the first anode and the second anode may be distinguished by the characteristics of each anode active material layer. The distinct physical properties of the first anode and the second anode may be attributed to the respective anode active material layers.

Each of the first anode active material layer and the second anode active material layer may include an anode active material, an anode binder, and a conductive material. The anode active material may include a compound capable of reversible intercalation and deintercalation with respect to lithium ions, natrium ions, or kalium ions. The anode binder may contain compounds that improve the internal adhesion of each anode active material layer and the adhesion of each anode active material layer with each anode current collector. The conductive materials may include compounds that can improve the conductivity of each anode active material layer and the mobility of ions or electrons.

Each anode active material layer is formed by each anode active material composition, and the anode active material layer may be formed by the anode active material composition being applied on each anode current collector and being dried. Unlike anode active material, anode active material composition may further include a solvent for processibility. The anode active material layer may indicate a state in which the anode active material composition is dried. The drying method is not particularly limited, and the drying method may be performed, for example, by hot air or infrared irradiation. Additionally, application may be performed according to known methods. Application can be performed, for example, by a method using a slot die, a doctor blade method, a dip method, a reverse roll method, a direct roll method, a gravure method, an extrusion method, or a brush application method. Further, the anode active material composition may be applied in an appropriate loading amount depending on the thickness of the desired anode active material layer. Further, the anode active material layer may be rolled for miniaturization and higher energy density of the battery cell 10. The rolling may be performed according to a known method, for example, through a rolling jig.

The first anode active material layer may be formed from the first anode active material composition, and the second anode active material layer may be formed from the second anode active material composition. Each of the first anode active material composition and the second anode active material composition may independently contain an anode active material, an anode binder and a conductive material, and may also contain a solvent. The solvent may include, for example, an aqueous solvent such as water (deionized water or ultrapure water), an organic solvent, or a mixture of two or more solvents. For example, the solvent may include an aqueous solvent such as water, or may include an organic solvent such as NMP, propylene carbonate, EC, n-butylene carbonate, DMC, DEC, gamma-Butyrolactone, 1,2-dimethoxy ethane, tetrahydrofuran, 2-methyltetrahydrofuran, diMethyl sulfoxide, formamide, dimethylformamide, acetonitrile, nitromethane, mMethyl formate, methyl acetate, triethyl phosphate, trimethoxymethane, sulfolane, methyl sulfolane, 1,3-dimethyl-2-imidazolidinone, propylene carbonate derivatives, tetrahydrofuran derivatives, methyl propionate, ethyl propionate and alcohol. Preferably, the anode active material composition may include an aqueous solvent, and specifically include water (deionized water or ultrapure water).

Meanwhile, the anode active material composition may further include a thickening agent and/or dispersant, if necessary. For example, the anode active material composition may include a cellulose-based compound as a thickening agent, and the cellulose-based compound may include, for example, one or more selected from the group consisting of CMC, cellulose acetate, cellulose acetate butylate, and cellulose acetate propionate.

The first anode and the second anode may satisfy at least one of the following conditions. However, if the physical properties of the first anode and the second anode can be distinguished, the first anode and the second anode are not limited to the conditions below and various conditions may be applied.

### [Conditions]

Condition iv) The main compound of the anode active material included in the first anode active material layer of the first anode and the main compound of the anode active material included in the second anode active material layer of the second anode have at least one different constituent element or have different content ratios.

Condition v) Different is the content ratio of one or more of the anode active material, the anode binder, and the conductive material that are included in the first anode active material layer of the first anode and the second anode active material layer of the second anode.

Condition vi) The loading amount (LW3) of first anode active material composition forming the first anode active material layer of the first anode and the loading amount (LW4) of second anode active material composition forming the second anode active material layer of the second anode are different.

As described above, in addition to the conditions, there may be condition where the types of anode binder included in the first anode active material layer and the anode binder included in the second anode active material layer are different or types of conductive materials are different. Further, there may be a condition where the thickness (D3) of the first anode active material layer of the first anode and the thickness (D4) of the second anode active material layer of the second anode are different. In other words, if the physical properties of the first anode and the second anode can be distinguished, the conditions are not particularly limited.

Further, in the present disclosure, the anode active material may include one or more selected from the group consisting of a silicon-based compound, a carbon-based compound, and an additional anode active material, and these may include doped or coated metals. With respect to a metal element used for doping or coating, for example, the metal may include one or more selected from the group consisting of lithium (Li), magnesium (Mg), calcium (Ca), iron (Fe), titanium (Ti), vanadium (V), and aluminum (Al). In the present disclosure, if not limited, the silicon-based compound may refer to a compound capable of reversible intercalation and deintercalation of lithium ions, natrium ions, or kalium ions and containing a silicon element (Si). Further, in the present disclosure, if not limited, the carbon-based compound may refer to a compound capable of reversible intercalation and deintercalation of lithium ions, natrium ions, or kalium ions and containing a carbon element (C). If both the silicon element (Si) and the carbon element (C) are contained, the anode active material may be classified as a silicon-based compound.

The silicon-based compound may include, for example, a compound with the structural formula SiOx(0<x≤2). Further, as described above, the silicon-based compound may include silicon carbide, which is a combination of crystalline carbon or amorphous carbon and silicon. The crystalline carbon may be graphite such as natural graphite or artificial graphite which is amorphous, plate-shaped, flake, spherical or fibrous. Further, the amorphous carbon may be, for example, soft carbon, hard carbon, or calcined coke. Carbon-based compounds may include, for example, graphitic materials such as artificial graphite, natural graphite, or graphitized carbon fiber. As a different classification, carbon-based compounds may include one or more that are selected from the group consisting of low crystalline carbon such as soft carbon or hard carbon and high crystalline carbon such as amorphous, plate-shaped, flake, spherical or fibrous natural graphite or artificial graphite, or Kish graphite, pyrolytic carbon, mesophase pitch based carbon fiber, mesocarbon microbeads, mesophase pitches or petroleum or coal tar pitch derived cokes. The additional anode active material may include a metal alloy compound, such as an alloy containing two or more elements selected from the group consisting of aluminum (Al), tin (Sn), lead (Pb), zinc (Zn), bismuth (Bi), indium (In), magnesium (Mg), gallium (Ga), cadmium (Cd), and silicon (Si); alternatively, the additional anode active material may include one or more selected from the group consisting of metal oxides (excluding compounds classified as silicon-based compounds and carbon-based compounds) capable of doping and dedoping lithium, such as vanadium oxide and lithium vanadium oxide. Additionally, above descriptions may be referred to for types of the anode active material included in the anode active material layer 200b when using one anode 200 without individual anodes.

In Condition iv), the main compound refers to the compound with the largest weight ratio among compounds included in the anode active material. The physical properties of the first anode and the second anode may be distinguished by varying the type of main compound of the anode active material contained in each anode active material layer. For example, among the anode active materials included in the first anode active material layer, the main compound may be a silicon-based compound, and among the anode active materials included in the second anode active material layer, the main compound may be a carbon-based compound.

In Condition iv), even if the main compound of the anode active material included in the first anode active material layer and the anode active material included in the second anode active material layer are the same, the physical properties may be distinguished by varying the content ratio compared to the total weight of the anode active material. For example, the anode active material included in the first anode active material layer may be 40% by weight of a silicon-based compound and 60% by weight of a carbon-based compound, and the anode active material included in the second anode active material layer may be 10% by weight of a silicon-based compound and 90% by weight of a carbon-based compound.

Not specifically limited but, for example, in Condition iv), only the anode active material included in the first anode active material layer and the anode active material included in the second anode active material layer may be different, and other conditions may be substantially the same. For example, one or more or all of the anode active material, the binder, and the conductive material included in the first anode active material layer and the second anode active material layer may have substantially the same content ratio. Here, "substantially the same content ratio" may indicate that the absolute value of the difference in content ratio of each component included in the first anode active material layer and the second anode active material layer is 1% or less, 0.5% or less, or 0.1% or less. Here, the content ratio may indicate the weight percent of the material in question compared to the total weight.

For example, in Condition iv), the absolute value of the difference (W_{NA1}-W_{NA2}) between the content ratio (W_{NA1}) of the anode active material included in the first anode active material layer and the content ratio (W_{NA2}) of the anode active material included in the second anode active material layer may be 1% or less, 0.5% or less, or 0.1% or less. Further, in Condition iv), the absolute value of the difference (W_{NB1}-W_{NB2}) between the content ratio (W_{NB1}) of the anode binder included in the first anode active material layer and the content ratio (W_{NB2}) of the anode binder included in the second anode active material layer may be 1% or less, 0.5% or less, or 0.1% or less. Further, in Condition iv), the absolute value of the difference (W_{NC1}-W_{NC2}) between the content ratio (W_{PC1}) of the conductive material included in the first anode active material layer and the content ratio (W_{NC2}) of the conductive material included in the second anode active material layer may be 1% or less, 0.5% or less, or 0.1% or less.

Not specifically limited but, for example, in Condition iv), each anode active material included in the first anode active material layer and the second anode active material layer may be independently 80% by weight or more, 81% by weight or more, 82% by weight or more, 83% by weight or more, 84% by weight or more, 85% by weight or more, 86% by weight or more, 87% by weight or more, 88% by weight or more, 89% by weight or more, 90% by weight or more, 91% by weight or more, 92% by weight or more, 93% by weight or more, 94% by weight or more, 95% by weight or more, or 96% by weight or more compared to the total weight, or may be 99% by weight or less or 98% by weight or less compared to the total weight. The content ratio of the anode active material may be within a range formed by appropriately selecting the above-described upper and lower limits. If the content ratio of the anode active material satisfies the above range, appropriate energy capacity may be secured while generating excellent current output. Further, for the content of anode active material contained in the anode active material layer 200b when using one anode 200 without individual anodes, above descriptions may be referred to. Below descriptions may be referred to for types and contents of each element included in the anode active material layer 200b when using one anode 200.

Not specifically limited but, for example, in Condition iv), each anode binder included in the first anode active material layer and the second anode active material layer may independently be 0.01 part by weight or more, 0.05 part by weight or more, 0.1 part by weight or more, 0.5 part by weight or more, 1 part by weight or more, or 1.5 parts by weight or more compared to 100 parts by weight of the anode active material, or may be 10 parts by weight or less, 9 parts by weight or less, 8 parts by weight or less, 7 parts by weight or less, 6 parts by weight or less, 5 parts by weight or less, 4 parts by weight or less, 3 parts by weight or less, or 2 parts by weight or less compared to 100 parts by weight of the anode active material. The content ratio of the anode binder may be within a range formed by appropriately selecting the above-described upper and lower limits. If the content ratio of the anode binder satisfies the above range, stability may be ensured by increasing the internal adhesion of the anode active material layer and improving adhesion with the anode current collector.

Further, for example, in Condition iv), each anode binder included in the first anode active material layer and the second anode active material layer may independently contain one or more selected from a group consisting of SBR, PVDF, polyvinyl alcohol, polyethylene oxide, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate and polyarylate. Preferably, the anode active material layer may include one or more selected from the group consisting of SBR, PVDF and polyvinyl alcohol, as the anode binder. However, it is not limited thereto. Further, preferably, each anode binder included in the first anode active material layer and the second anode active material layer may independently include SBR.

Further, for types and elements of anode binder included in the anode active material layer 200b when using one anode 200 without individual anodes, above descriptions may be referred to.

Not specifically limited but, for example, in Condition iv), the first anode active material layer and the second anode active material layer may further include a thickening agent along with the anode binder. Each thickening agent included in the first anode active material layer and the second anode active material layer may be included 0.01 part by weight or more, 0.05 part by weight or more, 0.1 part by weight or more, 0.5 part by weight or more, 1 part by weight or more, or 1.5 parts by weight or more based on 100 parts by weight of the anode active material, or may be included 10 parts by weight or less, 9 parts by weight or less, 8 parts by weight or less, 7 parts by weight or less, 6 parts by weight or less, 5 parts by weight or less, 4 parts by weight or less, 3 parts by weight or less, or 2 parts by weight or less based on 100 parts by weight of the anode active material. Further, each thickening agent included in the first anode active material layer and the second anode active material layer may independently be included 50 parts by weight or more, 55 parts by weight or more, 60 parts by weight or more, 65 parts by weight or more, 70 parts by weight or more, 75 parts by weight or more, 80 parts by weight or more, 85 parts by weight or more, 90 parts by weight or more, 95 parts by weight or more, 100 parts by weight or more compared to 100 parts by weight of the anode binder, or 200 parts by weight or less, 190 parts by weight or less, 180 parts by weight or less, 170 parts by weight or less, 160 parts by weight or less, 150 parts by weight or less, 140 parts by weight or less, 130 parts by weight or less, 120 parts by weight or less, or 110 parts by weight or less compared to 100 parts by weight of the anode binder. The content ratio of the thickening agent may be in a range formed by appropriately selecting the above-described upper and lower limits. If the content ratio of the thickening agent satisfies the above range, when the thickening agent combined with an anode binder, stability may be ensured by increasing the internal adhesion of the anode active material layer and improving adhesion with the anode current collector.

Not specifically limited but, for example, in Condition iv), each conductive material included in the first anode active material layer and the second anode active material layer may independently be included 0.1 part by weight or more, 0.5 part by weight or more, 1 part by weight or more, 2 parts by weight or more, 3 parts by weight or more, 4 parts by weight or more, or 5 parts by weight or more compared to 100 parts by weight of the anode active material, or may be included 20 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, or 10 parts by weight or less compared to 100 parts by weight of the anode active material. The content ratio of the conductive material may be in a range formed by appropriately selecting the above-described upper and lower limits. If the content ratio of the conductive material satisfies the above range, better conductivity may be provided.

Further, for example, in Condition iv), each conductive material included in the first anode active material layer and the second anode active material layer is not particularly limited as long as it is independently used in the industry. The conductive material may include carbon-based conductive materials such as graphite, carbon black, acetylene black, Ketjen black, graphene, CNT, VGCF and carbon fiber and/or metal-based conductive materials including tin, tin oxide, titanium oxide, and perovskite materials such as LaSrCoO₃ and LaSrMnO₃. CNT may include one or more selected from the group consisting of MWCNTs and SWCNTs depending on the number of walls.

Further, for types and element of conductive material included in the anode active material layer 200b when using one anode 200 without individual anodes, above descriptions may be referred to.

In Condition v), the difference (W_{NC1}-W_{NC2}) between the content ratio (W_{NC1}) of the conductive material included in the first anode active material layer of the first anode and the content ratio (W_{NC2}) of the conductive material included in the second anode active material layer of the second anode may be 3% by weight or more, 3.2% by weight or more, 3.4% by weight or more, 3.6% by weight or more, 3.8% by weight or more, or 4% by weight or more, or may be 9.5% by weight or less, 9% by weight or less, 8% by weight or less, 7% by weight or less, 6% by weight or less, or 5% by weight or less. The absolute value of the difference in content ratio (W_{NC1}-W_{NC2}) of the conductive material may be within the range formed by appropriately selecting the above-described upper and lower limits. In other words, the physical properties of the first anode and the physical properties of the second anode may be distinguished by varying the element of the conductive material contained in each anode active material layer.

In Condition v), each of the content ratio (W_{NC1}) of the conductive material included in the first anode active material layer of the first anode and the content ratio (W_{NC2}) of the conductive material included in the second anode active material layer of the second anode may be independently 10% by weight or less, 9.5% by weight or less, 9% by weight or less, 8.5% by weight or less, 8% by weight or less, 7.5% by weight or less, 7% by weight or less, 6.5% by weight or less, 6% by weight or less, 5.5% by weight or less 5% by weight or less compared to the total weight, or 0.1% by weight or more, 0.5% by weight or more or 1% by weight or more compared to the total weight. The content ratio of the conductive material may be within a range formed by appropriately selecting the above-described upper and lower limits. Regarding the type of conductive material, above descriptions regarding Condition iv) may be referred to.

In condition v), the anode active material included in the first anode active material layer of the first anode and the anode active material included in the second anode active material layer of the second anode may contain the same material. Here, "the same material" may indicate a compound of the same series. In other words, even if the ratio (e.g. molar ratio) of elements within the compound is different, when classifying according to whether it is silicon-based, carbon-based, a metal alloy compound, or a metal oxide, if it belongs to the same series, it can be considered the same material.

In Condition v), the absolute value of the difference (W_{NA1}-W_{NA2}) between the content ratio (W_{NA1}) of the anode active material included in the first anode active material layer of the first anode and the content ratio (W_{NA2}) of the anode active material included in the second anode active material layer of the second anode may be 3% by weight or more, 3.5% by weight or more, 4% by weight or more, 4.5% by weight or more, 5% by weight or more, 5.5% by weight or more, and 6% by weight or more, or, even though not specifically limited but may be 9.5% by weight or less, 9% by weight or less, 8.5% by weight or less, or 8% by weight or less. In Condition v), the absolute value of the difference in content ratio (W_{NA1}-W_{NA2}) of the anode active material may be within the range formed by appropriately selecting the above-described upper and lower limits.

Not specifically limited but, for example, in Condition v), each anode active material included in the first anode active material layer and the second anode active material layer may independently be included 80% by weight or more, 81% by weight or more, 82% by weight or more, 83% by weight or more, 84% by weight or more, 85% by weight or more, 86% by weight or more, 87% by weight or more, 88% by weight or more, 89% by weight or more, 90% by weight or more, 91% by weight or more, 92% by weight or more, 93% by weight or more, 94% by weight or more, 95% by weight or more, 96% by weight or more compared to the total weight, or may be 99% by weight or less or 98% by weight or less compared to the total weight. The content ratio of the anode active material may be within a range formed by appropriately selecting the above-described upper and lower limits. If the content ratio of the anode active material satisfies the above range, appropriate energy capacity may be secured while excellent current output being generated.

Not specifically limited but, for example, in Condition v), each anode binder included in the first anode active material layer and the second anode active material layer may independently be included 0.01 part by weight or more, 0.05 part by weight or more, 0.1 part by weight or more, 0.5 part by weight or more, 1 part by weight or more, or 1.5 parts by weight or more compared to 100 parts by weight of the anode active material, or may be included 10 parts by weight or less, 9 parts by weight or less, 8 parts by weight or less, 7 parts by weight or less, 6 parts by weight or less, 5 parts by weight or less, 4 parts by weight or less, 3 parts by weight or less, or 2 parts by weight or less compared to 100 parts by weight of the anode active material. The content ratio of the anode binder may be within a range formed by appropriately selecting the above-described upper and lower limits. If the content ratio of the anode binder satisfies the above range, stability may be ensured by increasing the internal adhesion of the anode active material layer and improving adhesion with the anode current collector. For types of the anode binder, above descriptions of Condition iv) may be referred to.

Meanwhile, the first anode and the second anode can be distinguished by CP_{R,n} when n is 100 in the formula R below. The second anode may have a higher CP_{R,n} when n is 100 in the equation R below compared to the first anode. [Formula R] ${CP}_{R , n} = {CP}_{n} / {CP}_{1} \times 100$

In Formula R, CPₙ indicates n cycle discharge capacity, and CP₁ indicates 1 cycle discharge capacity. Regarding the method of measuring cycle discharge capacity, the above descriptions may be referred to.

In order for CP_{R,n} of the second anode to be higher CP_{R,n} than the first anode when n is 100 in below Formula R, the anode active material included in the first anode active material layer and the anode active material included in the second cathode active material layer may be selected with different types and appropriately different mixing ratio. Further, the content ratio of at least one of the anode active material, the anode binder, and the conductive material included in each of the first anode active material layer and the second anode active material layer may be appropriately selected differently.

The ratio (Nₙ₁/Nₙ₂) of the number of first anodes (Nₙ₁) and the number of second anodes (Nₙ₂) may be 10 or less, 9 or less, 8 or less, 7 or less, 6 or less, or 5 or less, or may be 0.1 or greater, 0.5 or greater, 1 or greater, 2 or greater, 3 or greater, or 4 or greater. The ratio (Nₙ₁/Nₙ₂) of the number of first anodes and the number of second anodes may be within a range formed by appropriately selecting the upper and lower limits described above. If the ratio (Nₙ₁/Nₙ₂) of the number of first anodes and the number of second anodes satisfies the above-described range, by combining individual anodes with distinct physical properties, excellent capacity retention, high current output, and appropriate capacity may be secured. Meanwhile, the number of first anodes (Nₙ₁) and the number of second anodes (Nₙ₂) may be measured targeting the first anodes and second anodes connected to the same anode lead 420.

The number of first anodes (Nₙ₁) may be 95% or less, 90% or less, 85% or less, 80% or less, 75% or less, 70% or less, 65% or less, 60% or less, 55% or less, or 50% or less compared to the total number of anodes (N_{nT}), or may be 5% or more, 10% or more, 15% or more, 20% or more, 25% or more, 30% or more, 35% or more, 40% or more, or 45% or more (not including 100%) compared to the total number of anodes (N_{nT}). The number of first anodes (Nₙ₁) may be within a range formed by appropriately selecting the above-described upper and lower limits. The total number of anodes (N_{nT}) refers to the total number of anodes, including the first anode and second anode connected to the same anode lead 420, and the number of first anodes (Nₙ₁) indicates the number of first anodes connected to the anode lead 420.

The number of second anodes (Nₙ₂) may be 95% or less, 90% or less, 85% or less, 80% or less, 75% or less, 70% or less, 65% or less, 60% or less, 55% or less, 50% or less compared to the total number of anodes (N_{nT}), or may be 5% or more, 10% or more, 15% or more, 20% or more, 25% or more, 30% or more, 35% or more, 40% or more, or 45% or more (not including 100%) compared to the total number of anodes (N_{nT}). The number of second anodes (Nₙ₂) may be within a range formed by appropriately selecting the above-described upper and lower limits. The total number of anodes (N_{nT}) refers to the total number of anodes, including the first anodes and the second anodes connected to the same anode lead 420, and the number of second anodes (Nₙ₂) indicates the number of second anodes connected to the anode lead 420.

The number of first anodes (Nₙ₁) and the number of second anodes (Nₙ₂) compared to the total number of anodes (N_{nT}) are naturally influenced by the number of first anodes and the number of second anodes. For example, in the anodes 200 which includes only the first anode and the second anode, if the first anode is prepared in a number of about 60% of the total number of anodes (N_{nT}), the second anode is prepared in a number of about 40% of the total number of anodes (N_{nT}).

The battery cell 10 may include the separator 300. The separator is not particularly limited as long as it is used in the industry, but a separator having low resistance to ion movement of the electrolyte and excellent wettability of the electrolyte (particularly, the electrolyte) is preferable. For example, for the separator, a porous polymer film may be used. For example, a porous polymer film may be used that is made of polyolefin materials such as ethylene polymer, propylene polymer, ethylene/butene copolymer, ethylene/hexene copolymer, or ethylene/methacrylate copolymer, or a laminated structure of two or more layers thereof.

The battery cell 10 may include the case 500. In the battery cell 10, the electrode assembly may be embedded in the built-in space formed by the case 500. Further, the battery cell 10 may include an electrolyte, and the electrolyte may be built into the built-in space formed by the case 500.

The case 500 may have various shapes, and depending on the shape, the battery cell 10 may be classified into a cylindrical shape, a rectangular shape, a coin shape, or a pouch shape. Not specifically limited but the case 500 may contain aluminum (Al) to ensure rigidity, and when containing aluminum, the case 500 may protect the built-in electrode assembly from external shock or vibration.

Electrolyte is a material that enables the movement of electron transfer material between the cathode 100 and the anode 200. The electrolyte can be either liquid or solid at room temperature. If an electrolyte is liquid at room temperature, it can be called an electrolytic solution.

Unless specifically limited, electrolytes may include lithium salts used in the industry. For example, in the lithium salts, the anion may contain one or more selected from a group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻_{,}CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. If necessary, the electrolyte may contain natrium salts, and regarding the anion of natrium salt, the anion in the lithium salt described above may be referred to. Hereinafter, lithium salt will be used as a representative example.

At 25 °C, the electrolyte may contain lithium salt at a concentration of 0.1 M or more, 0.2 M or more, 0.3 M or more, 0.4 M or more, 0.5 M or more, 0.6 M or more, 0.7 M or more, 0.8 M or more, 0.9 M or more, or 1 M or more, or at a concentration of 10 M or less, 9 M or less, 8 M or less, 7 M or less, 6 M or less, 5 M or less, 4 M or less, 3 M or less, 2 M or less, or 1.5 M or less. Here, M indicates molarity (mol/L). The electrolyte may contain the lithium salt so that the concentration is within the range formed by appropriately selecting the upper and lower limits described above.

The electrolyte may further contain an organic solvent. The organic solvent may include one or more selected from the group consisting of carbonate-based solvents, ether-based solvents and ester-based solvents. The electrolyte may further contain an appropriate solvent based on appropriate viscosity and electrical conductivity.

The carbonate-based solvent may include one or more that are selected from the group consisting of cyclic carbonate-based solvents and linear carbonate-based solvents. The cyclic carbonate-based solvents, for example, may include one or more selected from the group consisting of ethylene carbonate (EC), propylene carbonate (PC), 1,2-buthylene carbonate (1,2-BC), 2,3-buthylene carbonate (2,3-BC), 1,2-pentylene carbonate (1,2-PTC), 2,3-pentylene carbonate (2,3-PTC) and vinylene carbonate (VC). The linear carbonate-based solvents, for example, may include one or more selected from the group consisting of methyl carbonate, ethyl carbonate, DMC, DEC, dipropyl carbonate (DPC), ethylmethyl carbonate (EMC), methylpropyl carbonate (MPC) and ethylpropyl carbonate (EPC).

The ether-based solvent may include one or more selected from the group consisting of dimethyl ether, diethyl ether, dipropyl ether, methylethyl ether, methylpropyl ether, and ethylpropyl ether.

The ester-based solvent may include one or more selected from the group consisting of linear ester-based solvent and cyclic ester-based solvent. For example, the linear ester compound may include one or more selected from the group consisting of methyl acetate, ethyl acetate, propyl acetate, methyl propionate, ethyl propionate, propyl propionate, and butyl propionate. Further, for example, a cyclic ester compound may include one or more selected from the group consisting of γ-butyrolactone (gamma-buturolactone), γ-valerolactone (gamma-valerolactone), γ-caprolactone (gamma-caprolactone), σ-valerolactone (sigma-valerolactone) and ε-caprolactone (epsilon-caprolactone).

If necessary, the electrolyte may further include one or more selected from the group consisting of sulfites-based compounds, sulfone-based compounds, nitrile-based compounds, and borate-based compounds.

Meanwhile, if the electrolyte is solid at room temperature, a solid electrolyte layer containing solid electrolyte is interposed between the cathode 100 and the anode 200 to transfer electron transfer material and simultaneously perform the function of a separator. Here, the battery cell 10 may be an all-solid battery. The solid electrolyte may be included without limitation as long as it is used in the industry.

The battery cell 10 may be manufactured by conventional methods. Further, the battery cell 10 may be manufactured by an existing method including all of the above-described configurations.

A battery module or a battery pack according to an example embodiment of the present disclosure may include one or more battery cells 10. Further, an electronic device according to an example embodiment of the present disclosure may include the battery cell 10, and the electronic device is a device that operates using power generated from the battery cell 10. For example, the electronic device may be a mobile phone, home appliance, an electric vehicle, a hybrid vehicle, or an energy storage system (ESS).

The battery cell 10 may be widely applied to green technology fields such as electric vehicles, battery charging stations, and other battery-based solar and wind power generation. Further, the battery cell 10 according to an example embodiment of the present disclosure may be applied to an eco-friendly electric vehicle or a hybrid vehicle to prevent climate change by suppressing air pollution and greenhouse gas emissions.

### [Method for measuring physical properties]

The physical properties described below are measured as follows.

### 1. Capacity retention evaluation

The manufactured battery cell is wrapped around the front and back of the battery cell with a plate jig made of aluminum (Al), and the plate jig is fastened with bolts to prevent the battery cell from moving. Here, under conditions where 25°C is maintained, the battery cell is charged/discharged according to the current conditions as shown in FIG. 13, and the discharge capacity is measured (1 cycle discharge capacity). FIG. 13 shows current conditions that simulate the behavior of an electric vehicle or a hybrid vehicle in a realistic manner, and through FIG. 13, it is possible to derive results closer to reality compared to measuring capacity retention under existing constant current/constant voltage (CC/CV) conditions. In Figure 13, the dotted line area (continuous measurement time: 5,000 seconds to 9,000 seconds) is displayed enlarged. Afterwards, charge/discharge is repeated n times (n>1, n is an integer) under the same current condition, and then the n cycle discharge capacity is measured. Further, capacity retention (CP_{R,n}), which is the ratio of n cycle discharge capacity to 1 cycle discharge capacity, is measured using formula R below and displayed in a graph. [Formula R] ${CP}_{R , n} = {CP}_{n} / {CP}_{1} \times 100$

In Formula R, CPₙ indicates n cycle discharge capacity, and CP₁ indicates 1 cycle discharge capacity. The unit of discharge capacity is mAh.

### 2. Charge/discharge graph

Under condition maintained at 25 °C, the manufactured battery cell is charged/discharged under 0.5 C constant current/constant voltage (CC/CV) condition in a voltage range of 2.5 V to 4.3 V, and this is shown in a charge/discharge graph.

Hereinafter, example embodiments of the present disclosure will be further described with reference to specific examples. Examples and Comparative examples are merely illustrative of the present disclosure and do not limit the scope of the appended claims. It is apparent to those skilled in the art that various changes and modifications to the example embodiments are possible within the scope and spirit of the present disclosure. Further, it is natural that such variations and modifications fall within the scope of the attached patent claims.

### [Manufacturing example]

### Manufacturing example 1- Manufacturing a first cathode

The first cathode is manufactured by the first cathode active material composition, which forms the first cathode active material layer, being applied in an appropriate loading amount on both sides of the aluminum foil, and by the aluminum foil onto which the first cathode active material composition is applied being dried at about 120 °C to form a first cathode active material layer, being rolled and cut to form the first cathode tab.

The first cathode active material composition is prepared by mixing the cathode active material (A), cathode binder (B), and conductive material (C) in a sufficient amount of solvent at a weight ratio of 96:2:2 (A:B:C).

For the cathode active material (A), Li-NCM with a weight ratio of nickel (Ni): cobalt (Co): manganese (Mn) = 8:1:1 is used. For the cathode binder (B), PVdF is used. For the conductive material (C), carbon black is used. Further, for the solvent, NMP is used.

### Manufacturing example 2 - Manufacturing a first cathode

The first cathode is manufactured in the same way as Manufacturing example 1 above except that the first cathode active material composition is prepared by mixing cathode active material (A), cathode binder (B), and conductive material (C) in a sufficient amount of solvent at a weight ratio of 90:5:5 (A:B:C).

### Manufacturing example 3 - Manufacturing a second cathode

The second cathode is manufactured by the second cathode active material composition, which forms a second cathode active material layer, being applied in an appropriate loading amount on both sides of the aluminum foil, and by the aluminum foil onto which the second cathode active material composition is applied being dried at about 120 °C to form the second cathode active material layer, being rolled and cut to form the second cathode tab.

The second cathode active material composition is prepared by mixing the cathode active material (A), cathode binder (B), and conductive material (C) in a sufficient amount of solvent at a weight ratio of 96:2:2 (A:B:C).

For the cathode active material (A), lithium iron phosphate (LFP) is used. For the cathode binder (B), the conductive material (C) and the solvent, the same cathode binder (B), conductive material (C), and solvent used in Manufacturing example 1 are used.

### Manufacturing example 4 - Manufacturing a second cathode

The second cathode is manufactured by the second cathode active material composition, which forms a second cathode active material layer, being applied in an appropriate loading amount on both sides of the aluminum foil, and by the aluminum foil coated with the second cathode active material composition being dried at about 120°C to form the second cathode active material layer, being rolled and cut to form the second cathode tab.

The second cathode active material composition is prepared by mixing the cathode active material (A), cathode binder (B), and conductive material (C) in a sufficient amount of solvent at a weight ratio of 98:1:1 (A:B:C).

For the cathode active material (A), Li-NCM with a weight ratio of nickel (Ni): cobalt (Co): manganese (Mn) = 8:1:1 is used. For the cathode binder (B), the conductive material (C) and the solvent, the same cathode binder (B), conductive material (C), and solvent as used in Manufacturing example 1 above are used.

### Manufacturing example 5 - Manufacturing a second cathode

The second cathode is manufactured in the same manner as Manufacturing example 4 above except that a second cathode active material composition is prepared by mixing the second cathode active material (A), first cathode binder (B), and conductive material (C) with a sufficient amount of solvent at a weight ratio of 96:2:2 (A:B:C).

### Manufacturing example 6 - Manufacturing an anode

The anode is manufactured by the anode active material composition, which forms an anode active material layer, being applied in an appropriate loading amount on both sides of the copper foil, and the copper foil coated with the anode active material composition being dried at about 80°C to form an anode active material layer, being rolled and cut to form anode tabs.

The anode active material composition is prepared by mixing artificial graphite (A), anode binder (B), conductive material (C) and thickening agent (D) at a weight ratio of 95:1.5:2:1.5 (A:B:C:D) in a sufficient amount of deionized water.

For the anode binder (B), SBR is used. For the conductive material (C), carbon black is used. For the thickening agent (D), CMC is used.

### Manufacturing example 7 - Manufacturing a first anode

The first anode is manufactured by the first anode active material composition, which forms the first anode active material layer, being applied at an appropriate loading amount on both sides of the copper foil, and by the copper foil coated with the first anode active material composition being dried at about 80 °C to form a first anode active material layer, being rolled and cut to form a first anode tab.

The first anode active material composition is prepared by mixing artificial graphite (A), anode binder (B), conductive material (C) and thickening agent (D) at a weight ratio of 92:1.5:5:1.5 (A:B:C:D) in a sufficient amount of deionized water.

For the anode binder (B), SBR is used. For the conductive material (C), carbon black is used. For the thickening agent (D), CMC is used.

### Manufacturing example 8 - Manufacturing a second anode

The second anode is manufactured by the second anode active material composition, which forms a second anode active material layer, being applied at an appropriate loading amount on both sides of the copper foil, and by the copper foil coated with the second anode active material composition being dried at about 80 °C to form a second anode active material layer, and being rolled and cut to form a second anode tab.

The second anode active material composition is prepared by mixing artificial graphite (A), anode binder (B), conductive material (C), and thickening agent (D) at a weight ratio of 98:0.5:1:0.5 (A:B:C:D) with a sufficient amount of deionized water.

For the anode binder (B), SBR is used. For the conductive material (C), carbon black is used. For the thickening agent (D), CMC is used.

### Manufacturing example 9 - Manufacturing an anode

The anode is manufactured in the same manner as Manufacturing example 6 above except that the anode active material composition is prepared by mixing the artificial graphite (A), the anode binder (B), the conductive material (C), and the thickening agent (D) in a ratio of 94:1.5:3:1.5 (A:B:C:D) in a sufficient amount of deionized water.

### [Examples]

### Example 1

An electrode assembly is manufactured by interposing a polyolefin separator (thickness: 15 *µ*m, porosity: 40%) between the first cathode manufactured in Manufacturing example 1 or the second cathode manufactured in Manufacturing example 3 and the anode manufactured in Manufacturing example 6. Meanwhile, the second cathode manufactured in Manufacturing example 3 has a larger value of CP_{R,100} according to formula R compared to the first cathode manufactured in Manufacturing example 1. Further, the first cathode tab of the first cathode and the second cathode tab of the second cathode are welded to the same cathode lead to be fixed and electrically connected, and the anode tab of the anode is welded to the anode lead to be fixed and electrically connected. The electrode assembly to which the electrode lead is connected is placed in a pouch case, an electrolyte is injected into the pouch case, and then sealed to manufacture a pouch-type battery cell.

Here, the ratio of the number of first cathodes (N₁) and the number of second cathodes (N₂) is set to 1:3 (N₁:N₂), number of first cathodes (N₁) is about 25% of the total number of cathodes (N_{T}), and the number of second cathodes (N₂) is about 75% of the total number of cathodes (N_{T}).

Specifically, the manufactured electrode assembly includes a laminated structure in the following order: a first cathode - an anode - a second cathode - an anode - a second cathode - an anode - a second cathode. The separator is inserted between the first cathode and the anode and between the second cathode and anode.

Further, the electrolyte solution is prepared to become liquid at room temperature, and the electrolyte solution is prepared by dissolving LiPF6, a lithium salt, in an organic solvent in which EC and EMC is mixed at a volume ratio of 25:75 (EC:EMC) to a concentration of 1.0 M (at 25°C).

### Example 2

A battery cell is manufactured in the same manner as Example 1 above except for that the ratio of the number of first cathodes (N₁) and the number of second cathodes (N₂) is set to be 2:2 (N₁:N₂), the number of first cathodes (N₁) is about 50% of the total number of cathodes (N_{T}), and the electrode assembly is manufactured with the number of second cathodes (N₂) being approximately 50% of the total number of cathodes (N_{T}).

Further, specifically, the manufactured electrode assembly includes a laminated structure (so-called the zigzag structure) in the following order: a first cathode - an anode - a second cathode - an anode - a first cathode - an anode - a second cathode, and the separator is inserted between the first cathode and the anode and between the second cathode and the anode.

### Example 3

A battery cell is manufactured in the same manner as Example 1 above except that the ratio of the number of first cathodes (N₁) and the number of second cathodes (N₂) is set to be 3:1 (N₁:N₂), the number of first cathodes (N₁) is about 75% of the total number of cathodes (N_{T}), and the electrode assembly is manufactured with the number of second cathodes (N₂) being approximately 25% of the total number of cathodes (N_{T}).

Further, specifically, the manufactured electrode assembly includes a laminated structure in the following order: a first cathode - an anode - a first cathode - an anode - a first cathode - an anode - a second cathode, and the separator is inserted between the first cathode and the anode and between the second cathode and the anode.

### Comparative Example 1

An electrode assembly is manufactured by interposing a polyolefin separator (thickness: 20 *µ*m, porosity: 40%) between the first cathode manufactured in Manufacturing example 1 and the anode manufactured in Manufacturing example 6. Further, the first cathode tab of the first cathode is welded to the cathode lead to be fixed and electrically connected, and the anode tab of the anode is welded to the anode lead to be fixed and electrically connected. The electrode assembly to which the electrode lead is connected is placed in a pouch case, an electrolyte is injected into the pouch case, and then sealed to manufacture a pouch-type battery cell. The total number of cathodes (N_{T}) is the same as Example 1. Further, the electrolyte is the same as that used in Example 1 above.

### Comparative Example 2

An electrode assembly is manufactured by interposing a polyolefin separator (thickness: 20 *µ*m, porosity: 40%) between the second cathode manufactured in Manufacturing example 3 and the anode manufactured in Manufacturing example 6. Further, the second cathode tab of the second cathode is welded to the cathode lead to be fixed and electrically connected, and the anode tab of the anode is welded to the anode lead to be fixed and electrically connected. A pouch-type battery cell is manufactured by placing the electrode assembly to which the electrode lead is connected into a pouch case, injecting electrolyte into the pouch case, and then sealing the pouch case. The total number of cathodes (N_{T}) is the same as Example 1. Further, the electrolyte is the same as that used in Example 1 above.

### Example 4

An electrode assembly is manufactured by interposing a polyolefin separator (thickness: 20 *µ*m, porosity: 40%) between the first cathode manufactured in Manufacturing example 2 or the second cathode manufactured in Manufacturing example 4 and the anode manufactured in Manufacturing example 6. Meanwhile, the second cathode manufactured in Manufacturing example 4 has a larger value of CP_{R,100} according to formula R compared to the first cathode manufactured in Manufacturing example 2. Further, the first cathode tab of the first cathode and the second cathode tab of the second cathode are welded to the same cathode lead to be fixed and electrically connected, and the anode tab of the anode is welded to the anode lead to be fixed and electrically connected. A pouch-type battery cell is manufactured by placing the electrode assembly to which the electrode lead is connected in a pouch case, injecting electrolyte into the pouch case, and sealing the pouch case.

Here, the ratio between the number of first cathodes (N₁) and the number of second cathodes (N₂) is set to 2:2 (N₁:N₂), the number of first cathodes (N₁) is about 50% of the total number of cathodes (N_{T}), and the number of second cathodes (N₂) is about 50% of the total number of cathodes (N_{T}).

Specifically, the manufactured electrode assembly includes a laminated structure (so-called the zigzag structure) in the following order: a first cathode - an anode - a second cathode - an anode - a first cathode - an anode - a second cathode, and the separator is inserted between the first cathode and the anode and between the second cathode and the anode.

Further, the electrolyte solution is prepared to become liquid at room temperature, and the electrolyte solution is prepared by dissolving LiPF6, a lithium salt, in an organic solvent in which EC and EMC are mixed in a volume ratio of 25:75 (EC:EMC) to a concentration (based on 25 °C) of 1.0 M.

### Example 5

A battery cell is manufactured in the same manner as Example 4 above except that the ratio of the number of first cathodes (N₁) and the number of second cathodes (N₂) is set to be 3:1 (N₁:N₂), the number of first cathodes (N₁) is about 75% of the total number of cathodes (N_{T}), and the electrode assembly is manufactured with the number of second cathodes (N₂) being approximately 25% of the total number of cathodes (N_{T}).

Further, specifically, the manufactured electrode assembly contains a laminated structure in the following order: a first cathode - an anode -a first cathode - an anode - a first cathode - an anode - a second cathode. The separator is inserted between the first cathode and the anode and between the second cathode and the anode.

### Comparative Example 3

An electrode assembly is manufactured by interposing a polyolefin separator (thickness: 20 *µ*m, porosity: 40%) between the second cathode manufactured in Manufacturing example 5 and the anode manufactured in Manufacturing example 6. Further, the second cathode tab of the second cathode is welded to the cathode lead to be fixed and electrically connected, and the anode tab of the anode is welded to the anode lead to be fixed and electrically connected. A pouch-type battery cell is manufactured by placing the electrode assembly to which the electrode lead is connected into a pouch case, injecting electrolyte into the pouch case, and sealing the pouch case. The total number of cathodes (N_{T}) is the same as Example 4. Further, the same electrolyte used in Example 4 is used.

### Example 6

An electrode assembly is manufactured by interposing a polyolefin separator (thickness: 15 *µ*m, porosity: 40%) between the (first) cathode manufactured in Manufacturing example 1 and the first anode manufactured in Manufacturing example 7 or the second anode manufactured in Manufacturing example 8. Meanwhile, the second anode manufactured in Manufacturing example 8 has a larger value of CP_{R,100} according to formula R compared to the first anode manufactured in Manufacturing example 7. Further, the first anode tab of the first anode and the second anode tab of the second anode are welded to the same anode lead to be fixed and electrically connected, and the (first) cathode tab of the cathode is welded to the cathode lead to be fixed and electrically connected. A pouch-type battery cell is manufactured by placing the electrode assembly to which the electrode lead is connected in a pouch case, injecting electrolyte into the pouch case, and then sealing the pouch case.

Here, the ratio of the number of first anodes (Nₙ₁) and the number of second anodes (Nₙ₂) is set to 2:2 (Nₙ₁:Nₙ₂), number of first anodes (Nₙ₁) is about 50% of the total number of anodes (N_{nT}), and the number of second anodes (Nₙ₂) is about 50% of the total number of anodes (N_{nT}).

Specifically, the manufactured electrode assembly includes a laminated structure (so-called the zigzag structure) in the order of the first anode manufactured in Manufacturing example 7 - the cathode - the second anode - the cathode - the first anode - the cathode - the second anode, and the separator is inserted between the first anode and the cathode and between the second anode and the cathode.

Further, the electrolyte solution is prepared to become liquid at room temperature, and the electrolyte solution is prepared by dissolving LiPF6, a lithium salt, in an organic solvent in which EC and EMC are mixed in a volume ratio of 25:75 (EC:EMC) to a concentration of 1.0 M (at 25°C).

### Comparative Example 4

An electrode assembly is manufactured by interposing a polyolefin separator (thickness: 20 *µ*m, porosity: 40%) between the (first) cathode manufactured in Manufacturing example 1 and the anode manufactured in Manufacturing example 9. Further, the (first) cathode tab of the cathode is welded to the cathode lead to be fixed and electrically connected, and the anode tab of the anode is welded to the anode lead to be fixed and electrically connected. A pouch-type battery cell is manufactured by placing the electrode assembly to which the electrode lead is connected into a pouch case, injecting electrolyte into the pouch case, and sealing the pouch case. The total number of anodes (N_{nT}) is the same as Example 6. Further, the electrolyte solution is the same as that used in Example 6 above.

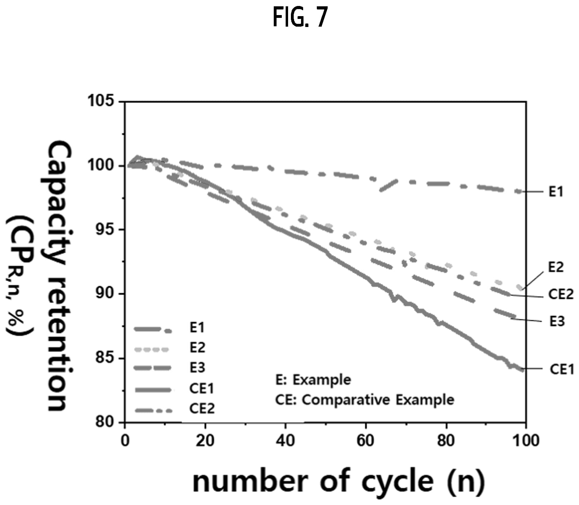

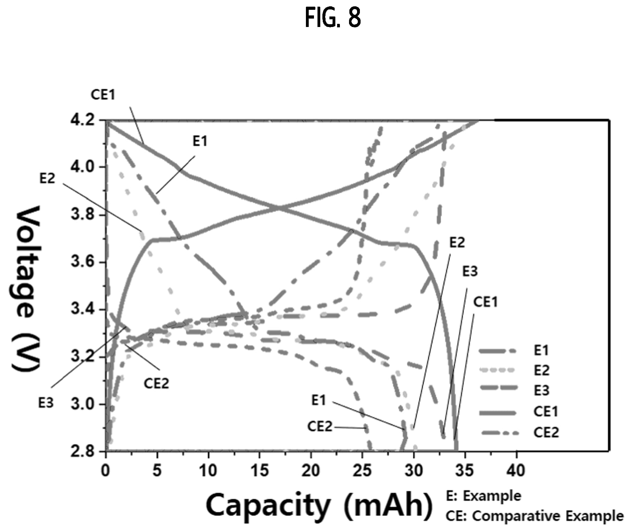

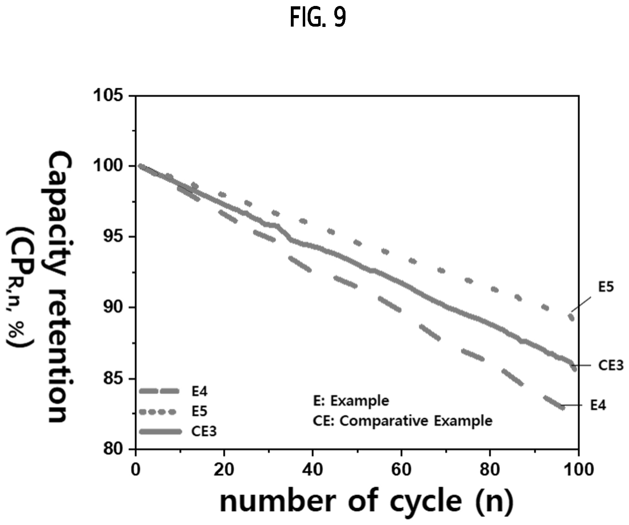

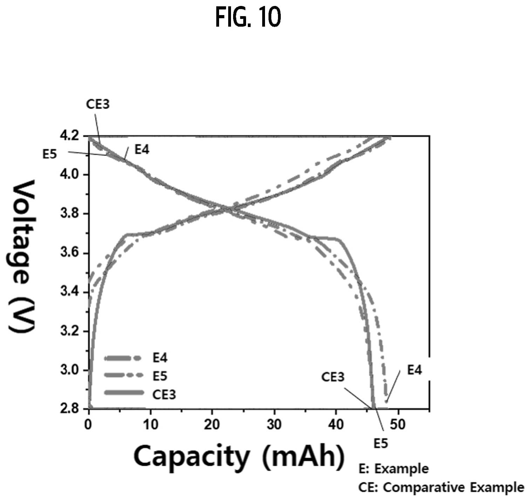

The results of tests conducted based on the battery cells manufactured in Example 1 to Example 3, Comparative Example 1 and Comparative Example 2 are shown in FIGS. 7 and 8. The results of tests conducted based on the battery cells manufactured in Example 4, Example 5, Comparative Example 3 and Comparative Example 4 are shown in FIGS. 9 and 10.

In FIG. 7, Examples 1 to 3 show the excellent capacity retention, and Comparative Example 1 shows the low capacity retention. Further, in FIG. 8, Examples 1 to 3 show the excellent output and have the appropriate capacity, while Comparative Example 2 has the high resistance, the great voltage drop, the low current output, and the relatively low capacity.

In FIG. 9, Example 4 and Example 5 show the relatively excellent capacity retention. Further, in FIG. 10, Example 4 and Example 5 show the excellent output and have the relatively large capacities, and Comparative Example 3 has the relatively low capacity.

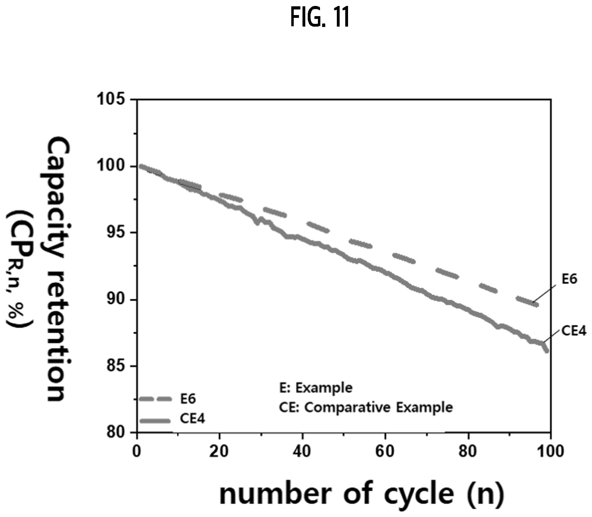

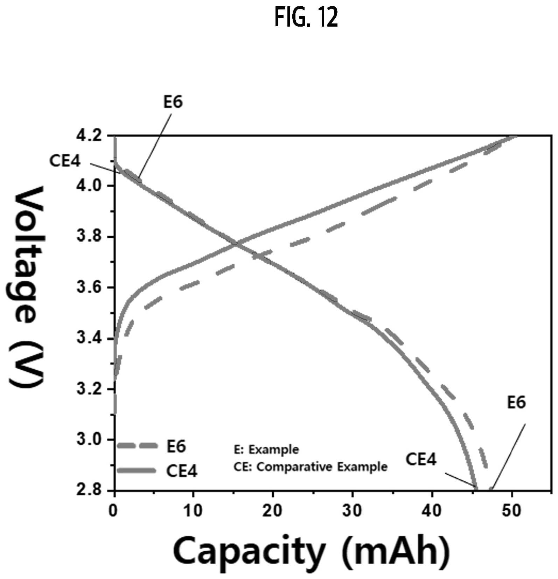

In FIG. 11, Example 6 shows the relatively excellent capacity retention. Further, in FIG. 12, Example 6 shows the excellent output and has the relatively large capacity, and Comparative Example 4 has the relatively low capacity.

Although various example embodiments of the present disclosure have been described in detail above, the scope of the present disclosure is not limited thereto. Further, it will be apparent to those with average knowledge in the technical field that various modifications and variations are possible without departing from the technical spirit of the present disclosure as set forth in the claims. Additionally, some components may be deleted from the above-described embodiment, and each example embodiment may be implemented in combination with each other.

### [Description of Reference Numerals]

10... battery cell 100... cathode
110... first cathode 110a... first cathode tab
110b... first cathode active material layer 110c... first cathode uncoated area
120... second cathode 120a... second cathode tab
120b... second cathode active material layer 120c... second cathode uncoated area
200... anode 200a... anode tab
200b... anode active material layer 200c... anode uncoated area
300... separator 400... electrode lead
410... cathode lead 420... anode lead
500... case 600... terminal
610... cathode terminal 620... anode terminal

## Claims

1. A battery cell comprising:
a cathode;
an anode; and
a separator between the cathode and the anode,
wherein the cathode includes a first cathode and a second cathode,
wherein the first cathode includes a first cathode active material layer, and the second cathode includes a second cathode active material layer,
wherein each of the first cathode active material layer and the second cathode active material layer includes a cathode active material, a cathode binder and a conductive material, and
wherein the first cathode and the second cathode satisfy at least one of the following conditions:
condition i) a cathode active material included in the first cathode active material layer and a cathode active material included in the second cathode active material layer are different materials,
condition ii) a content ratio of at least one selected from among the cathode active material, the cathode binder, and the conductive material included in the first cathode active material layer differs from a content ratio thereof included in the second cathode active material layer, and
condition iii) a loading amount (LW1) of a first cathode active material composition forming the first cathode active material layer differs from a loading amount (LW2) of a second cathode active material composition forming the second cathode active material layer.

2. The battery cell of claim 1, wherein the first cathode includes a first cathode tab and the second cathode includes a second cathode tab,
wherein the first cathode tab and the second cathode tab are connected to an identical cathode lead.

3. The battery cell of claim 1, wherein the second cathode has a higher CP_{_{R,n}} when n is 100 in below formula R, when compared to the first cathode, and
wherein a ratio (N₁/N₂) of a number of the first cathodes (N₁) to the number of the second cathodes (N₂) is 10 or less, [Formula R] ${CP}_{R , n} = {CP}_{n} / {CP}_{1} \times 100 ,$
wherein CPₙ indicates n cycle discharge capacity, and CP₁ indicates 1 cycle discharge capacity.

4. The battery cell of claim 3, wherein the number of the first cathodes (N₁ is 95% or less than 95% of a total number of cathodes (N_{T}), and the number of the second cathodes (N₂) is 5% or more than 5% (not including 100%) of the total number of cathodes (N_{T}).

5. The battery cell of claim 1, wherein the anode includes a first anode and a second anode,
wherein the first anode includes a first anode active material layer, and the second anode includes a second anode active material layer,
wherein each of the first anode active material layer and the second anode active material layer includes an anode active material, an anode binder and a conductive material, and
wherein the first anode and the second anode satisfy at least one of the following conditions:
condition iv) at least one of a constituent element and a content ratio of a main compound of the anode active material included in the first anode active material layer differs from a corresponding constituent element or content ratio of a main compound of the anode active material included in the second anode active material layer,
condition v) a content ratio of at least one selected from among the anode active material, the anode binder, and the conductive material included in the first anode active material layer differs from a content ratio thereof included in the second anode active material layer, and
condition vi) a loading amount (LW3) of a first anode active material composition forming the first anode active material layer differs from a loading amount (LW4) of a second anode active material composition forming the second anode active material layer.

6. The battery cell of claim 5, wherein the first anode includes a first anode tab, and the second anode includes a second anode tab,
wherein the first anode tab and the second anode tab are connected to an identical anode lead.

7. The battery cell of claim 1, wherein,
in condition i), at least one or more constituent element in the cathode active material included in the first cathode active material layer is different from the cathode active material included in the second cathode active material layer, or
even if the cathode active material included in the first cathode active material layer and the cathode active material included in the second cathode active material layer are expressed with an identical chemical formula, composition ratios of elements that make up the chemical formula are different.

8. The battery cell of claim 1, wherein,
in condition i), each of the cathode active material included in the first cathode active material layer and the cathode active material included in the second cathode active material layer is suitable to include one or more compounds that are selected from a group consisting of a compound presented by chemical formula P1 below, a compound represented by chemical formula P2 below and a compound represented by chemical formula P3 below, independently, and
one or more elements selected from the group consisting of A, M₁, M₂ and M₃ in following chemical formula P1, chemical formula P2 and chemical formula P3 included in the cathode active material included in the first cathode active material layer are different from the cathode active material included in the second cathode active material layer, or a numerical value of one or more that are selected from a group consisting of a, x, y and z of the cathode active material included in the first cathode active material layer is different from the cathode active material included in the second cathode active material layer,
[chemical formula P1] AₐM₁ₓM_{2y}M_{3z}O₂
[chemical formula P2] AₐM₁ₓM_{2y}M_{3z}(PO₄)
[chemical formula P3] AₐM₁ₓM_{2y}M_{3z}(CN)₆,
wherein,
in the chemical formula P1, chemical formula P2 and chemical formula P3,
A is lithium (Li), natrium (Na) or kalium (K),
M₁, M₂ and M₃ are one or more that are selected from a group of nickel (Ni), cobalt (Co), manganese (Mn), iron (Fe), chrome (Cr), vanadium (V), niobium (Nb), boron (B), aluminium (Al), copper (Cu), zirconium (Zr), tungsten (W), titanium (Ti), zinc (Zn), gallium (Ga), germanium (Ge), molybdenum (Mo), tantalum (Ta), yttrium (Y), barium (Ba) and hafnium (Hf), not overlapping each other,
each of x, y and z is independently 0 or more and 1 or less, and satisfies x+y+z=1, and
in chemical formula P1, a is 0.5 or more and 1.8 or less, in chemical formula P2, a is 0.8 or more and 1.2 or less, and in chemical formula P3, a is 0.8 or more and 2.2 or less.

9. The battery cell of claim 1, wherein,
in condition i), an absolute value of a difference (W_{PA1}-W_{PA2}) between a content ratio (W_{PA1}) of the cathode active material included in the first cathode active material layer and a content ratio (W_{PA2}) of the cathode active material included in the second cathode active material layer is 1% by weight or less.

10. The battery cell of claim 1, wherein,
in condition ii), a content ratio (W_{PC1}) of a conductive material included in the first cathode active material layer is greater than a content ratio (W_{PC2}) of a conductive material included in the second cathode active material layer.

11. The battery cell of claim 10, wherein,
in condition ii), a difference (W_{PC1}-W_{PC2}) of a content ratio (W_{PC1}) of the conductive material included in the first cathode active material layer and a content ratio (W_{PC2}) of the conductive material included in the second cathode active material layer is 3% by weight or greater.

12. The battery cell of claim 10, wherein,
in condition ii), each of the content ratio (W_{PC1}) of the conductive material included in the first cathode active material layer and a content ratio (W_{PC2}) of the conductive material included in the second cathode active material layer is independently 10% by weight or less.

13. The battery cell of claim 10, wherein,
in condition ii), the cathode active material included in the first cathode active material layer and the cathode active material included in the second cathode active material layer include an identical material.

14. The battery cell of claim 13, wherein,
in condition ii), an absolute value of the difference (W_{PA1}-W_{PA2}) between the content ratio (W_{PA1}) of the cathode active material included in the first cathode active material layer and the content ratio (W_{PA2}) of the cathode active material included in the second cathode active material layer is 3% by weight or more.

15. The battery cell of claim 13, wherein,
in condition ii), each of the content ratio (W_{PA1}) of the cathode active material included in the first cathode active material layer and the content ratio (W_{PA2}) of the cathode active material included in the second cathode active material layer is independently 80% by weight or more.

16. A battery cell comprising:
a cathode;
an anode; and
a separator between the cathode and the anode,
wherein the anode includes a first anode and a second anode,
wherein the first anode includes a first anode active material layer, and the second anode includes a second anode active material layer,
wherein each of the first anode active material layer and the second anode active material layer includes an anode active material, an anode binder and a conductive material, and
wherein the first anode and the second anode satisfy at least one of:
condition iv) that at least one constituent element or a content ratio of a main compound in an anode active material included in the first anode active material layer is different from a main compound in an anode active material included in the second anode active material layer;
condition v) that different is a content ratio of at least one of the anode active material, the anode binder and the conductive material included the first anode active material layer and the second anode active material layer; and
condition vi) that a loading amount (LW3) of first anode active material composition forming the first anode active material layer and a loading amount (LW4) of second anode active material composition forming the second anode active material layer are different.

17. The battery cell of claim 16, wherein,
in condition v), a difference (W_{NC1}-W_{NC2}) between a content ratio (W_{NC1}) of a conductive material included in the first anode active material layer and a content ratio (W_{NC2}) of a conductive material included in the second anode active material layer is 3% by weight or more.

18. The battery cell of claim 16, wherein,
in condition v), an absolute value of a difference (W_{NA1}-W_{NA2}) between a content ratio (W_{NA1}) of an anode active material included in the first anode active material layer and a content ratio (W_{NA2}) of an anode active material included in the second anode active material layer is 3% by weight or more.
